# EUROPEAN PATENT APPLICATION

(11) **EP 4 057 285 A1**
(43) Date of publication of application: **14.09.2022**
(21) Application number: 20898239.7
(22) Date of filing: 25.11.2020
(51) Int. Cl.: G11B 27/00, G11B 20/10, H04N 5/76

(54) **DATA PROCESSING DEVICE, DATA PROCESSING METHOD, AND PROGRAM**

(30) Priority: 09.12.2019 JP 2019222244
(71) Applicant: Sony Group Corporation, Tokyo 108-0075 (JP)
(72) Inventor: FUNAMOTO, Daisuke, Tokyo 108-0075 (JP); ITO, Ryogo, Tokyo 108-0075 (JP); ISOBE, Yukio, Tokyo 108-0075 (JP)
(74) Representative: D Young & Co LLP
(86) International application number: PCT/JP2020/043734
(87) International publication number: WO 2021/117481

(57) **Abstract**

The present technology relates to a data processing device, a data processing method, and a program that are enabled to easily perform simultaneous generation of a plurality of files in which file streams having different data formats are stored.

From an identical image, file data is generated that is obtained by encoding the image and to be stored in each of a plurality of files. First file data stored in one file of the plurality of files and second file data stored in another one file are data different from each other in at least one of codec, chroma format, or bit depth. The present technology can be applied to generation of a plurality of files having the same image content.

## Description

### TECHNICAL FIELD

The present technology relates to a data processing device, a data processing method, and a program, and more particularly, to a data processing device, a data processing method, and a program that are enabled to easily perform simultaneous generation of a plurality of files in which file streams having different data formats are stored, for example.

### BACKGROUND ART

As a file format for efficiently storing images, there is a High Efficiency Image File Format (HEIF) (see Non-Patent Document 1).

### CITATION LIST

### NON-PATENT DOCUMENT

Non-Patent Document 1: ISO/IEC 23008-12:2017, Information technology -- High efficiency coding and media delivery in heterogeneous environments -- Part 12: Image File Format

### SUMMARY OF THE INVENTION

### PROBLEMS TO BE SOLVED BY THE INVENTION

An image stream stored in a file is referred to as a file stream.

For an HEIF file and a file storing other images, it is convenient if it is possible to simultaneously generate a plurality of files in which file streams having different data formats such as image sizes are stored, for images having the same contents.

The present technology has been made in view of such a situation, and is enabled to easily perform simultaneous generation of a plurality of files in which file streams having different data formats are stored.

### SOLUTIONS TO PROBLEMS

A first data processing device or a first program of the present technology is: a data processing device including an encoding control unit that generates, from an identical image, file data obtained by encoding an image and to be stored in each of a plurality of files, in which first file data to be stored in one file of the plurality of files and second file data to be stored in another one file are data different from each other in at least one of codec, chroma format, or bit depth; or a program for causing a computer to function as such a data processing device.

A first data processing method of the present technology is a data processing method including generating, from an identical image, file data obtained by encoding an image and to be stored in each of a plurality of files, in which first file data to be stored in one file of the plurality of files and second file data to be stored in another one file are data different from each other in at least one of codec, chroma format, or bit depth.

In the first data processing device, the first data processing method, and the first program of the present technology, from the identical image, the file data is generated that is obtained by encoding the image and to be stored in each of the plurality of files. The first file data stored in the one file of the plurality of files and the second file data stored in the another one file are the data different from each other in at least one of codec, chroma format, or bit depth.

A second data processing device or a second program of the present technology is: a data processing device including an encoding control unit that generates, from an identical image, file data obtained by encoding an image and to be stored in each of a plurality of files including at least a High Efficiency Image File Format (HEIF) file, in which first file data to be stored in the HEIF file of the plurality of files and second file data to be stored in another one file other than the HEIF file are data different from each other in at least one of codec, chroma format, bit depth, or image size; or a program for causing a computer to function as such a data processing device.

A second data processing method of the present technology is a data processing method including generating, from an identical image, file data obtained by encoding an image and to be stored in each of a plurality of files including at least a High Efficiency Image File Format (HEIF) file, in which first file data to be stored in the HEIF file of the plurality of files and second file data to be stored in another one file other than the HEIF file are data different from each other in at least one of codec, chroma format, bit depth, or image size.

In the second data processing device, the second data processing method, and the second program of the present technology, from the identical image, the file data is generated that is obtained by encoding the image and to be stored in each of the plurality of files including at least the High Efficiency Image File Format (HEIF) file. The first file data stored in the HEIF file of the plurality of files and the second file data stored in the another one file other than the HEIF file are the data different from each other in at least one of codec, chroma format, bit depth, or image size.

Note that the data processing device may be an independent device or an internal block included in one device.

Furthermore, the program can be provided by being recorded on a recording medium or by being transmitted via a transmission medium.

### BRIEF DESCRIPTION OF DRAWINGS

Fig. 1 is a block diagram illustrating a configuration example of an embodiment of a digital camera to which the present technology is applied.
Fig. 2 is a diagram illustrating an example of a format of a Joint Photographic Experts Group (JPEG) file conforming to JPEG.
Fig. 3 is a diagram illustrating an example of an ISO base media file format.
Fig. 4 is a diagram illustrating an example of a format of an HEIF file conforming to HEIF.
Fig. 5 is a diagram illustrating an example of a format of an HEIF file in an image item format.
Fig. 6 is a diagram illustrating an example of an iprp box.
Fig. 7 is a diagram illustrating an example of a format of an HEIF file in an image sequence format.
Fig. 8 is a diagram illustrating an example of a trak box.
Fig. 9 is a diagram illustrating an example of a collection file in which a master image and a thumbnail image are stored.
Fig. 10 is a diagram illustrating an example of a sequence file in which a track of a master image and a track of a thumbnail image of the master image are stored.
Fig. 11 is a diagram explaining an outline of generation of a file stream to be stored in a file in a digital camera 10.
Fig. 12 is a diagram explaining a first example of generation of a plurality of files of the same image content in the digital camera 10.
Fig. 13 is a diagram explaining a second example of generation of a plurality of files of the same image content in the digital camera 10.
Fig. 14 is a flowchart explaining processing of generation of a plurality of files of the same image content in the digital camera 10.
Fig. 15 is a block diagram illustrating a first configuration example of an encoding control unit 42.
Fig. 16 is a diagram explaining an example of generation of an HEIF file and a JPEG file having the same image content in a case where the encoding control unit 42 includes one chip of a semiconductor chip 110.
Fig. 17 is a diagram explaining another example of generation of an HEIF file and a JPEG file having the same image content in a case where the encoding control unit 42 includes the one chip of the semiconductor chip 110.
Fig. 18 is a diagram explaining an example of generation of an HEIF file and an ARW file having the same image content in a case where the encoding control unit 42 includes the one chip of the semiconductor chip 110.
Fig. 19 is a diagram explaining an example of generation of two HEIF files having the same image content in a case where the encoding control unit 42 includes the one chip of the semiconductor chip 110.
Fig. 20 is a diagram explaining an example of generation of two JPEG files having the same image content in a case where the encoding control unit 42 includes the one chip of the semiconductor chip 110.
Fig. 21 is a block diagram illustrating a second configuration example of the encoding control unit 42.
Fig. 22 is a diagram explaining an example of generation of an HEIF file and a JPEG file having the same image content in a case where the encoding control unit 42 includes two chips of semiconductor chips 210 and 220.
Fig. 23 is a diagram explaining another example of generation of an HEIF file and a JPEG file having the same image content in a case where the encoding control unit 42 includes the two chips of the semiconductor chips 210 and 220.
Fig. 24 is a block diagram illustrating a configuration example of an embodiment of a computer to which the present technology is applied.

### MODE FOR CARRYING OUT THE INVENTION

### <Embodiment of digital camera to which present technology is applied>

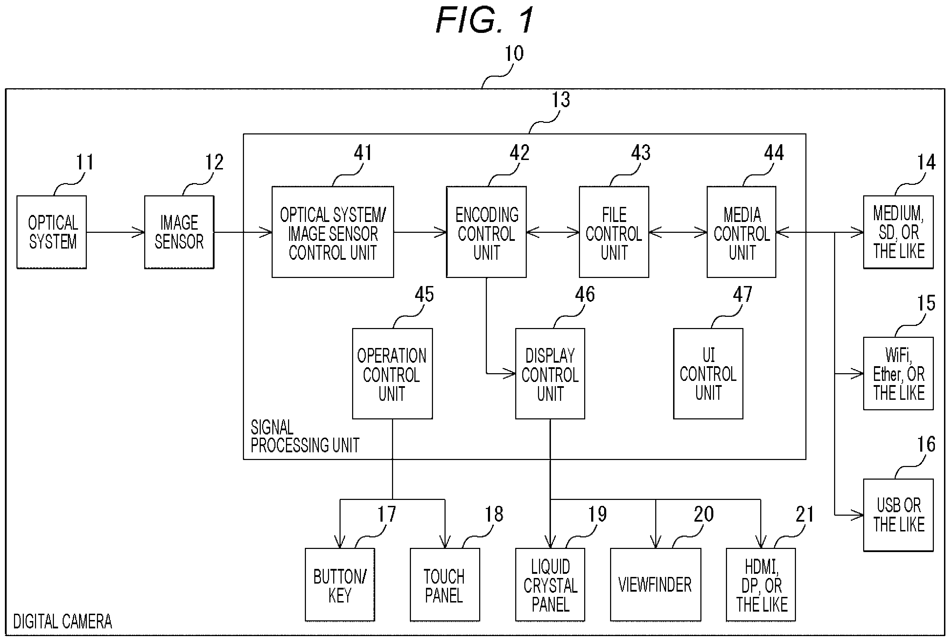

Fig. 1 is a block diagram illustrating a configuration example of an embodiment of a digital camera to which a data processing device of the present technology is applied.

A digital camera 10 includes an optical system 11, an image sensor 12, a signal processing unit 13, a medium 14, interfaces (I/Fs) 15 and 16, a button/key 17, a touch panel 18, a liquid crystal panel 19, a viewfinder 20, an I/F 21, and the like.

The optical system 11 focuses light from a subject on the image sensor 12.

The image sensor 12 generates image data as an electric signal by receiving light from the optical system 11 and performing imaging with photoelectric conversion, and supplies the image data to the signal processing unit 13.

The signal processing unit 13 includes an optical system/image sensor control unit 41, an encoding control unit 42, a file control unit 43, a media control unit 44, an operation control unit 45, a display control unit 46, and a UI control unit 47.

The optical system/image sensor control unit 41 controls the optical system 11 and the image sensor 12, and supplies (data of) an image obtained by imaging performed in accordance with the control to the encoding control unit 42.

The encoding control unit 42 supplies the image from the optical system/image sensor control unit 41 to the display control unit 46, encodes the image as necessary, and supplies the encoded image to the file control unit 43. Furthermore, the encoding control unit 42 decodes the image supplied from the file control unit 43 as necessary, and supplies the decoded image to the display control unit 46.

The file control unit 43 generates a file storing the image supplied from the encoding control unit 42, and supplies the file to the media control unit 44. Furthermore, the file control unit 43 reproduces the file supplied from the media control unit 44, that is, reads data such as an image stored in the file, and the like. For example, the image read from the file is supplied from the file control unit 43 to the encoding control unit 42.

The media control unit 44 controls exchange of files between the medium 14 and the I/Fs 15 and 16. For example, the media control unit 44 causes the file from the file control unit 43 to be recorded on the medium 14 or transmitted from the I/Fs 15 and 16. Furthermore, the media control unit 44 reads a file from the medium 14, or causes the I/Fs 15 and 16 to receive a file and supplies the file to the file control unit 43.

The operation control unit 45 supplies an operation signal corresponding to operation to a necessary block depending on the operation of the button/key 17 or the touch panel 18 by a user.

The display control unit 46 performs display control and the like to supply the image and the like supplied from the encoding control unit 42 to the liquid crystal panel 19, the viewfinder 20, and the I/F 21 to display them.

The UI control unit 47 manages user interface (UI) control.

The medium 14 is a storage medium, for example, an SD card or the like. The I/F 15 is an I/F of a local area network (LAN), for example, WiFi (registered trademark), Ethernet (registered trademark), or the like. The I/F 16 is an I/F, for example, a universal serial bus (USB). The button/key 17 and the touch panel 18 are operated by the user when a command or other information is input to the digital camera 10. The touch panel 18 can be formed integrally with the liquid crystal panel 19. The liquid crystal panel 19 and the viewfinder 20 display the image and the like supplied from the display control unit 46. The I/F 21 is an I/F that transmits at least an image, such as High-Definition Multimedia Interface (HDMI (registered trademark)) or Display Port (DP) .

In the digital camera 10 configured as described above, the optical system/image sensor control unit 41 generates, from a RAW data image (hereinafter, also referred to as a RAW image) obtained by imaging by the image sensor 12, an image of YUV having the same resolution (number of pixels) (size) as that of the RAW image, for example, and supplies the image of YUV to the encoding control unit 42 together with the RAW image. The encoding control unit 42 generates a master image and the like of an HEIF file from the image of YUV from the optical system/image sensor control unit 41. For example, the image of YUV from the optical system/image sensor control unit 41 can be used as the master image of the HEIF file as it is.

The encoding control unit 42 generates, from a master image of YUV, an image of YUV (hereinafter, also referred to as a screen nail image) having a resolution lower than that of the master image, for example, as a first other image based on the master image for use in display on the liquid crystal panel 19 or an external display, and generates an image of YUV (hereinafter, also referred to as a thumbnail image) having a resolution lower than that of the screen nail image, for example, as a second other image based on the master image for use in index display (list display). For example, the encoding control unit 42 supplies the screen nail image to the liquid crystal panel 19 via the display control unit 46 to display the screen nail image as a so-called through image. As the thumbnail image, for example, it is possible to adopt an image having a size of less than or equal to 320 pixels on the long side. A ratio of the size (number of pixels) between the master image and the screen nail image as the first other image based on the master image or the thumbnail image as the second other image based on the master image can be, for example, less than or equal to 200 times. A ratio of the size between the screen nail image as the first other image based on the master image and the thumbnail image as the second other image based on the master image can also be less than or equal to 200 times similarly. As the screen nail image, for example, it is possible to adopt an image having a resolution of greater than or equal to 4K. Furthermore, as the screen nail image, for example, it is possible to adopt an image of 4K (QFHD) or FHD depending on the user's selection. Moreover, images having the same resolution can be adopted as the master image and the screen nail image. In a case where the images having the same resolution are adopted as the master image and the screen nail image, both the master image and the screen nail image can be stored in the HEIF file, or the master image can be stored without storing the screen nail image. In a case where the master image is stored in the HEIF file without storing the screen nail image, the master image can be resized and used as the screen nail image.

Furthermore, the encoding control unit 42 encodes the master image, the screen nail image, and the thumbnail image corresponding to the RAW image (master image, screen nail image, and thumbnail image generated from the same RAW image) as necessary, and supplies them to the file control unit 43 together with the RAW image.

The file control unit 43 generates a RAW file in which a RAW image is stored, an HEIF file in which the corresponding master image, screen nail image, and thumbnail image (master image, screen nail image, and thumbnail image generated from the same RAW image) are stored, and/or a JPEG file and the like as necessary, and supplies the generated file to the media control unit 44. The HEIF file is a file conforming to High Efficiency Image File Format (HEIF), and the JPEG file is a file conforming to Joint Photographic Experts Group (JPEG).

The media control unit 44 records the RAW file, the HEIF file, or the JPEG file from the file control unit 43 on the medium 14 or transmits the RAW file, the HEIF file, or the JPEG file from the I/F 15 or 16.

A type (for example, RAW file, HEIF file, JPEG file, or the like) of the file to be generated in the file control unit 43 can be selected depending on, for example, the user's operation (designation). Furthermore, as will be described later, the HEIF files include an image item format and an image sequence format, and which one of the image item format and the image sequence format is adopted can be selected depending on the user's operation, for example. Moreover, the file control unit 43 can perform mutual conversion between the HEIF file and the JPEG file depending on the user's operation.

Furthermore, the file control unit 43 can generate a plurality of files having the same image content and different from each other in codec, image size (resolution), color format, or bit depth.

In a case where the file control unit 43 generates the plurality of files having the same image content, the encoding control unit 42 generates image streams (file streams) to be stored in the respective plurality of files from the image of YUV from the optical system/image sensor control unit 41.

The encoding control unit 42 can generate the image streams different from each other in codec, image size (resolution), color format, or bit depth.

For example, the encoding control unit 42 can generate an image of a predetermined size, a predetermined color format, and a predetermined bit depth from the image of YUV supplied from the optical system/image sensor control unit 41, and generate a first stream obtained by encoding the image with a predetermined codec (encoding method). Moreover, the encoding control unit 42 can generate an image of another size, another color format, and another bit depth from the same image of YUV supplied from the optical system/image sensor control unit 41, and generate a second stream obtained by encoding the image with another codec.

Then, the file control unit 43 can generate a file storing the first stream and a file storing the second stream.

### <JPEG file>

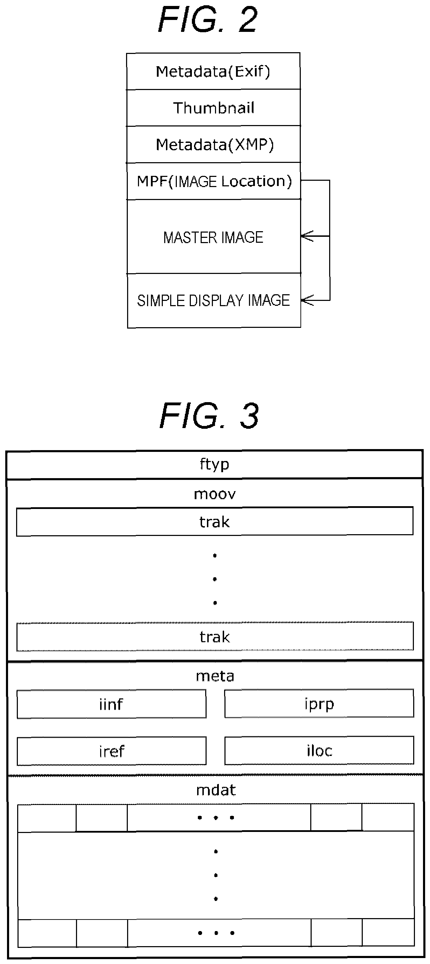

Fig. 2 is a diagram illustrating an example of a format of a Joint Photographic Experts Group (JPEG) file conforming to JPEG.

The JPEG file is configured to store, for example, Exif metadata, thumbnail images, Extensible Metadata Platform (XMP) (registered trademark) metadata, an MPF representing storage locations (positions) and the like of a master image and a simple display image, the master image, and the simple display image. As the simple display image, for example, a screen nail image can be adopted.

### <ISO base media file format>

Fig. 3 is a diagram illustrating an example of an ISO base media file format.

HEIF (ISO/IEC 23008-12) is a file format conforming to the ISO base media file format (ISO/IEC 14496-12), and thus, the HEIF file is conforming to the ISO base media file format.

The ISO base media file format includes a unit called a box as a container for storing data, and has a structure called a box structure.

The box includes a type (box type), actual data (data), and the like. The type represents a type of the actual data in the box. As the actual data, it is possible to adopt reproducible media data such as an image (still image, moving image), audio, and subtitle, an attribute name (field name) and an attribute value (field value) of (a variable represented by) the attribute name, and various other data.

Moreover, a box can be adopted as actual data.
That is, the box can have a box as the actual data, and can therefore have a hierarchical structure.

A base media file conforming to the ISO base media file format can include an ftyp box, a moov box (MovieBox), a meta box (MetaBox), an mdat box (MediaDataBox), and the like. In the ftyp box, identification information for identifying the file format is stored. The moov box can store a trak box and the like. The meta box can store an iinf box, an iprp box, an iref box, an iloc box, and the like. The mdat box can store media data (AV data) and any other data.

HEIF conforms to the ISO base media file format as described above.

### <HEIF file>

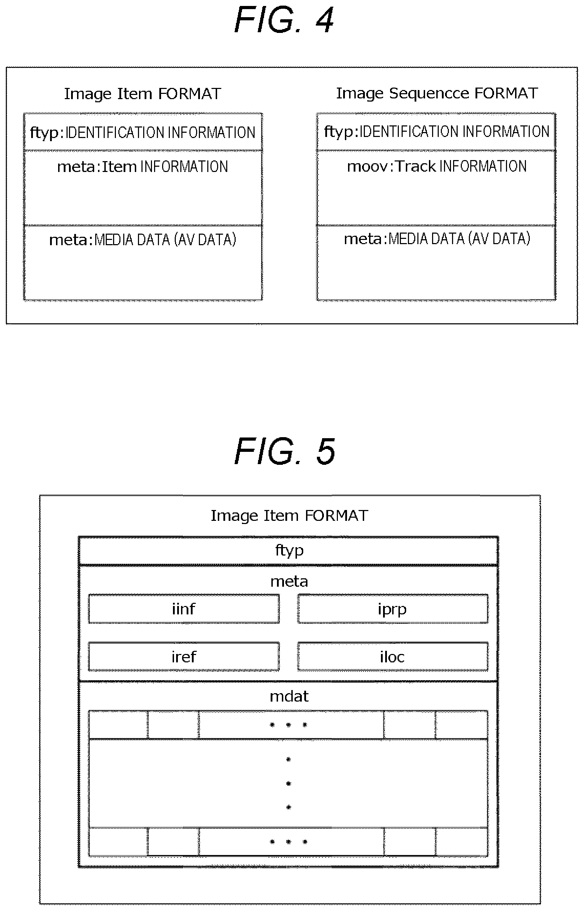

Fig. 4 is a diagram illustrating an example of a format of an HEIF file conforming to HEIF.

The HEIF file is roughly divided into the image item format and the image sequence format. Moreover, the image item format includes a single image format having only one item described later and an image collection format having a plurality of items.

The HEIF file in the image item format includes an ftyp box, a meta box, and an mdat box.

The HEIF file in the image sequence format includes an ftyp box, a moov box, and an mdat box.

Note that the HEIF file can include not only one of the meta box and the moov box but also both of them.

In the ftyp box, identification information for identifying the file format is stored, for example, that the file is an HEIF file in the image item format or the image sequence format, or the like.

In the meta box and the moov box, metadata is stored necessary for reproduction, management, and the like of media data stored in the mdat box, for example, metadata such as a storage location of the media data.

In the mdat box, media data (AV data) and the like are stored.

In the digital camera 10, which HEIF file of the HEIF file in the image item format and the HEIF file in the image sequence format is to be generated can be selected depending on the user's operation, for example. Furthermore, in a case where an image is encoded and stored in the mdat box of the HEIF file, only intra encoding is permitted for the image item format, and intra encoding and inter encoding are permitted for the image sequence format. Thus, for example, in a case where priority is given to high-speed access to the data stored in the HEIF file, generation of the HEIF file in the image item format can be selected, and in a case where priority is given to reducing the size (amount of data) of the HEIF file, generation of the HEIF file in the image sequence format can be selected.

Fig. 5 is a diagram illustrating an example of a format of the HEIF file in the image item format.

In the HEIF file in the image item format, information is stored (as an attribute value) representing that the HEIF file is in the image item format, for example, mif1 or the like, in the ftyp box.

In the meta box, an iinf box, an iref box, an iprp box, and an iloc box are stored.

In the iinf box, (an attribute name and an attribute value representing) the number of items that are the media data (AV data) stored in the mdat box, and the like are stored. The item is one data stored in the mdat box of the HEIF file in the image item format, and for example, one piece (screen) of image is an item. In the present specification, one piece of image is also referred to as a frame regardless of a still image and a moving image. One frame is one item.

In the iref box, information is stored representing a relationship between items. For example, in the mdat box, it is possible to store each of the corresponding master image, screen nail image, and thumbnail image as an item. In a case where an item I1 as the master image, an item I2 as the screen nail image, and an item I3 as the thumbnail image are stored in the mdat box, information representing that the item I2 is the screen nail image of the master image as the item I1, and information representing that the item I3 is the thumbnail image of the master image as the item I1 are stored in the iref box.

In the iprp box, information regarding a property of an item is stored.

In the iloc box, information regarding a storage location of an item stored in the mdat box is stored.

In the mdat box (of the HEIF file) in the image item format, for example, a frame of an image as an item is stored. One or more items can be stored in the mdat box. Furthermore, a frame as an item can be encoded and stored in the mdat box. However, encoding of the frame as the item stored in the mdat box in the image item format is limited to intra encoding. As an encoding method (codec) for encoding the frame as the item, for example, HEVC or the like can be adopted.

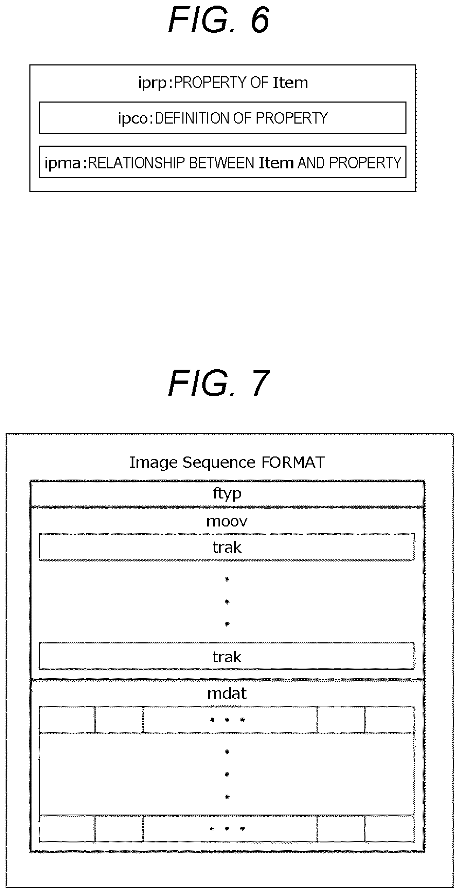

Fig. 6 is a diagram illustrating an example of the iprp box in Fig. 5.

In the iprp box, an ipco box and an ipma box regarding the property of the item are stored. In the ipco box, the property of the item stored in the mdat box is stored, for example, codec information regarding the codec of the image as the item and image size information regarding the size. In the ipma box, an index (pointer) of the item stored in the mdat box to the property stored in the ipco box is stored.

Fig. 7 is a diagram illustrating an example of a format of the HEIF file in the image sequence format.

In the HEIF file in the image sequence format, information is stored representing that the HEIF file is in the image sequence format, for example, msf1 or the like, in the ftyp box.

In the moov box, a trak box is stored. In the trak box, information regarding a track stored in the mdat box is stored.

The track includes one independent piece of media data reproduced in accordance with a timeline, such as an image or audio. For example, the track includes one or more frames of images to be an elementary stream. For the track stored in the mdat box, a plurality of tracks, for example, the tracks of the respective image and audio recorded simultaneously can be reproduced simultaneously.

The media data of the track includes a unit called a sample. The sample is a minimum unit (access unit) in a case where the media data in the HEIF file is accessed. Thus, the media data in the HEIF file cannot be accessed in units finer than the samples.

For the image media data, for example, one frame or the like is one sample. Furthermore, for the audio media data, for example, one audio frame or the like defined in the standard of the audio media data is one sample.

In the mdat box (of the HEIF file) in the image sequence format, the media data of the track is arranged in units called chunks. The chunk is a set of one or more samples arranged at logically continuous addresses.

In a case where a plurality of tracks as media data is stored in the mdat box, the plurality of tracks is interleaved and arranged in units of chunks.

As described above, in the mdat box in the image sequence format, one or more tracks including media data such as an image or audio are stored.

In the mdat box, frames of images constituting the track can be encoded and stored. In encoding of the frame constituting the track stored in the mdat box in the image sequence format, a long GOP can be adopted as a Group of Picture (GOP), and both intra encoding and inter encoding can be adopted. As a codec for encoding the frame constituting the track, for example, HEVC or the like can be adopted.

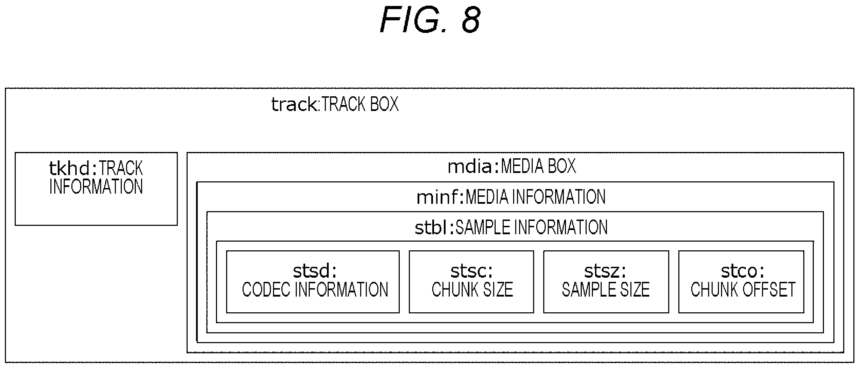

Fig. 8 is a diagram illustrating an example of the trak box.

In the trak box, a tkhd box and an mdia box can be stored. In the tkhd box, header information of the track is stored, such as creation date and time of the track managed by the trak box. In the mdia box, an minf box and the like are stored. In the minf box, an stbl box is stored. In the stbl box, an stsd box, an stsc box, an stsz box, and an stco box are stored in which a sample of the track and, consequently, information for accessing a chunk are stored. In the stsd box, codec information regarding the codec of the track is stored. In the stsc box, a chunk size (the number of samples of one chunk) is stored. In the stsz box, a sample size is stored. In the stco box, a chunk offset is stored, that is, an offset of an arrangement position of each chunk of the track stored in the mdat box.

Here, the HEIF file in the image item format is also referred to as a collection file, and the HEIF file in the image sequence format is also referred to as a sequence file.

In the digital camera 10, it is possible to generate an HEIF file in which the master image and, further, one or both of the necessary screen nail image and the thumbnail image are stored.

### <Collection file>

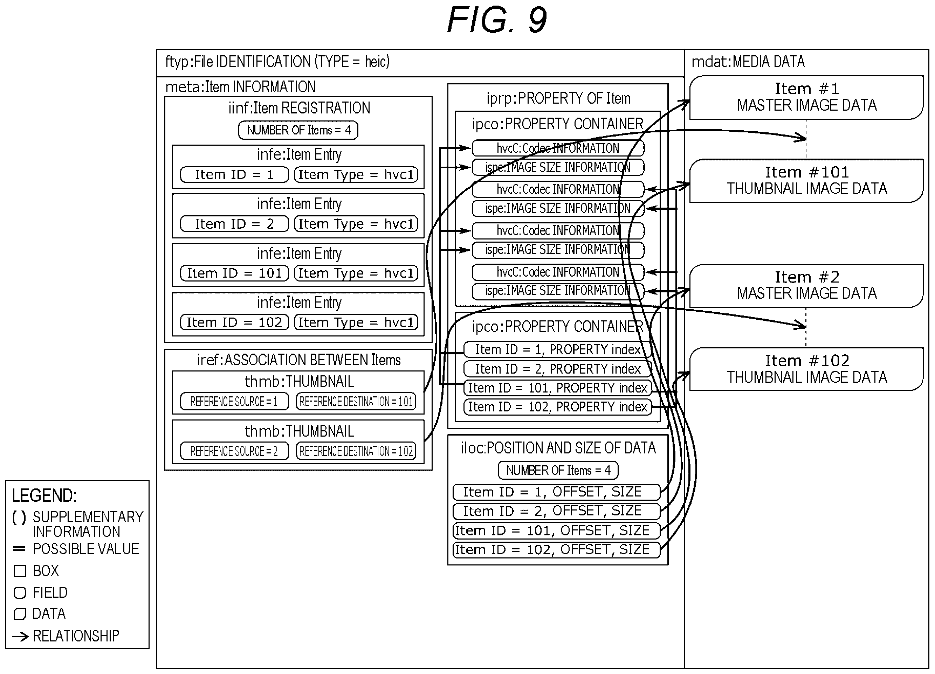

Fig. 9 is a diagram illustrating an example of the collection file in which the master image and the thumbnail image are stored.

Now, it is assumed that the frame (item) is encoded by HEVC and stored in the mdat box of the collection file.

In the ftyp box, as identification information for identifying the file format, heic is stored representing that the file format is an image item format and that the codec is HEVC.

In the iinf box, the number of items stored in the mdat box is stored. In Fig. 9, in the mdat box, a total of four items (frames) are stored including a master image identified by an item ID #1 (hereinafter, also described as a master image Item #1), a master image Item #2, a thumbnail image identified by an item ID #101 (hereinafter, also described as a thumbnail image Item #101), and a thumbnail image Item #102. Thus, the number of items is four. Note that the thumbnail image Item #101 is a thumbnail image of the master image Item #1, and the thumbnail image Item #102 is a thumbnail image of the master image Item #2.

In the iinf box, for example, an infe box is further stored for each item stored in the mdat box. In the infe box, an item ID for identifying the item and an item type are registered. In Fig. 9, there is an infe box of each of the master images Item #1 and Item #2 and the thumbnail images Item #101 and Item #102.

In the iref box, for example, a thmb box is stored as information for associating items stored in the mdat box with each other. In the thmb box, a reference source and a reference destination as information for associating the master image with the thumbnail image of the master image are stored in association with each other. In the thmb box, the reference source represents the item ID of the master image, and the reference destination represents the item ID of the thumbnail image of the master image identified by the item ID of the reference source. Thus, with the reference destination associated with the reference source, it is possible to recognize the item ID of the thumbnail image of the master image identified by the item ID represented by the reference source. Furthermore, with the reference source associated with the reference destination, it is possible to recognize the item ID of the master image of the thumbnail image identified by the item ID represented by the reference destination.

In the iprp box, as described in Fig. 6, the ipco box and the ipma box are stored. In the ipco box, as described in Fig. 6, properties of a frame as an item stored in the mdat box are stored, for example, codec information regarding the codec and image size information regarding the size. In the ipma box, as described in Fig. 6, the index of the item stored in the mdat box to the property stored in the ipco box is stored.

In the iloc box, as described in Fig. 6, the information regarding the storage location of the item in the mdat box is stored. In Fig. 9, the iloc box stores that the number of items is four. Moreover, in the iloc box, an offset to a storage location, and a size, of each of the master images Item #1 and Item #2 and the thumbnail images Item #101 and Item #102 stored in the mdat box are stored in association with the item ID.

### <Sequence file>

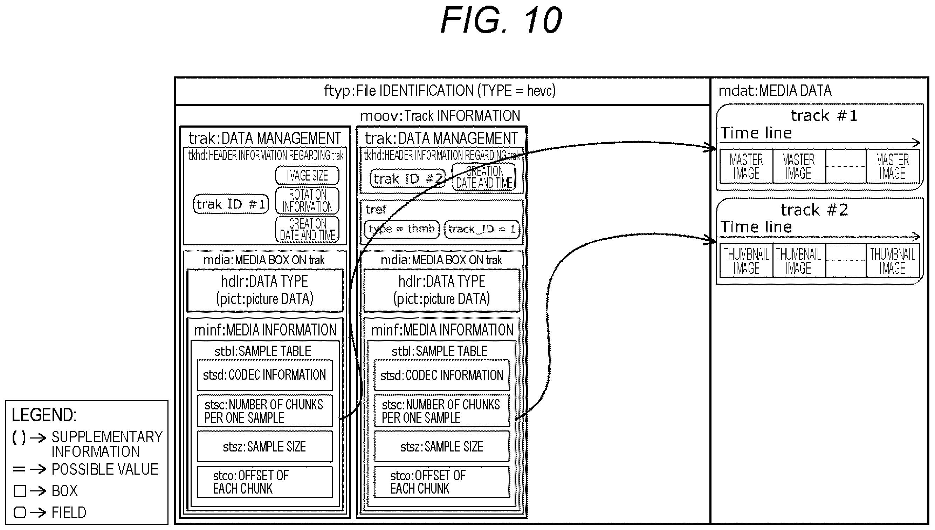

Fig. 10 is a diagram illustrating an example of a sequence file in which a track of a master image and a track of a thumbnail image of the master image are stored.

Now, it is assumed that the frame is encoded by HEVC and stored in the mdat box of the sequence file.

In the ftyp box, as identification information for identifying the file format, hevc is stored representing that the file format is the image sequence format and the codec is HEVC.

In the moov box, as described in Fig. 7, the trak box for managing each track stored in the mdat box is stored. In Fig. 10, a track of a master image identified by a track ID #1 (hereinafter, also described as a track #1) and a track #2 of a thumbnail image of the master image of the track #1 are stored in the mdat box. Thus, in the moov box, a trak box for managing the track #1 and a trak box for managing the track #2 are stored. (The frame of) the nth thumbnail image (from the beginning) of the track #2 is the thumbnail image of the nth master image of the track #1.

In a case where continuous shooting is performed by the digital camera 10, for example, the sequence file is useful in a case where master images and thumbnail images of a plurality of frames obtained by the continuous shooting are each recorded as one track, or the like.

The tkhd box of the trak box for managing the track #1 of the master image stores the track ID #1 for identifying the track #1, an image size of the master image constituting the track #1, rotation information representing a direction of the digital camera 10 when the master image is captured, and creation date and time of the track #1. The tkhd box of the trak box for managing the track #2 of the thumbnail image stores the track ID #2 for identifying the track #2, and creation date and time of the track #2.

In the trak box, in addition to the tkhd box and the mdia box described in Fig. 7, a tref box can be stored. In the tref box, a track ID for identifying another track associated with a track managed by a trak box in which the tref box is stored, information representing contents of the track, and the like are stored. In Fig. 10, the tref box is provided in the trak box for managing the track #2. Then, in the tref box, information is stored representing that another track associated with the track #2 is the track #1 (track_ID = 1) and that data constituting the track #2 is a thumbnail image (track #2 is a track of the thumbnail image) (type = thmb).

In the mdia box of the trak box, in addition to the minf box described in Fig. 8, an hdlr box can be stored. In the hdlr box, information is stored representing a type of data constituting a track managed by a trak box in which the hdlr box is stored. In a hdlr box stored (in the mdia box stored) in the trak box for managing the track #1 of the master image, information (pict) is stored representing that data constituting the track #1 is a picture (frame), and in a hdlr box stored in the trak box for managing the track #2 of the thumbnail image, information is stored representing that data constituting the track #2 is a picture.

The minf box is as described in Fig. 8.

### <Generation of file stream>

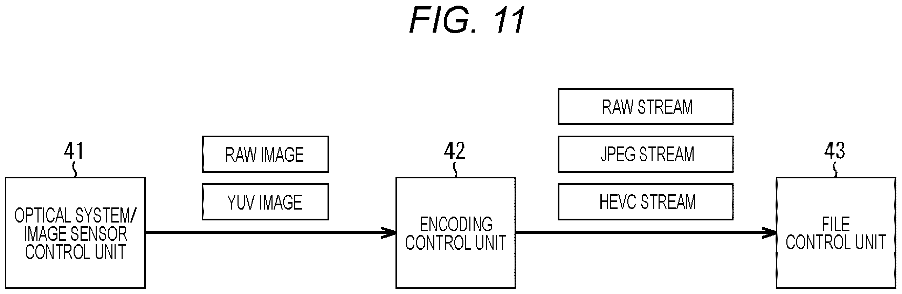

Fig. 11 is a diagram explaining an outline of generation of a file stream to be stored in a file in the digital camera 10.

In the digital camera 10, the encoding control unit 42 generates a stream (file data) (hereinafter, also referred to as a file stream) to be stored in a file to be generated by the file control unit 43, from a RAW image and a YUV image (image of YUV (YCbCr) (YPbPr)) supplied from the optical system/image sensor control unit 41.

The encoding control unit 42, for example, as necessary, supplies (the data stream of) the RAW image from the optical system/image sensor control unit 41 to the file control unit 43 as it is as a RAW stream (Elementary Stream (ES)). Furthermore, the encoding control unit 42, for example, as necessary, performs JPEG encoding on the YUV image (image of YUV) from the optical system/image sensor control unit 41, and supplies a JPEG stream (ES) obtained as a result to the file control unit 43. Moreover, the encoding control unit 42, for example, as necessary, performs HEVC encoding on the YUV image from the optical system/image sensor control unit 41, and supplies an HEVC stream (ES) obtained as a result to the file control unit 43.

In a case where a RAW file is generated, the file control unit 43 generates a RAW file storing the RAW stream and the JPEG stream from the encoding control unit 42. Note that at least the RAW stream needs to be stored in the RAW file, and the JPEG stream does not necessarily need to be stored in the RAW file. However, in a case where the JPEG stream is stored in the RAW file, an image can be easily displayed by using the JPEG stream. That is, there is a case where it is desired to display an image to confirm what kind of image stream is stored in the RAW file. In this case, when the RAW stream is stored but the JPEG stream is not stored in the RAW file, it is necessary to display the image by using the RAW stream stored in the RAW file. In a case where the image is displayed by using the RAW stream, development processing of the RAW stream is required. On the other hand, when the JPEG stream is stored in the RAW file, the image can be easily displayed by using the JPEG stream without performing the development processing. Hereinafter, the RAW file in which the JPEG stream is stored in addition to the RAW stream is also referred to as an ARW file.

In a case where a JPEG file is generated, the file control unit 43 generates a JPEG file storing the JPEG stream from the encoding control unit 42.

Furthermore, in a case where an HEIF file is generated, the file control unit 43 generates an HEIF file storing the HEVC stream from the encoding control unit 42.

### <Generation of file>

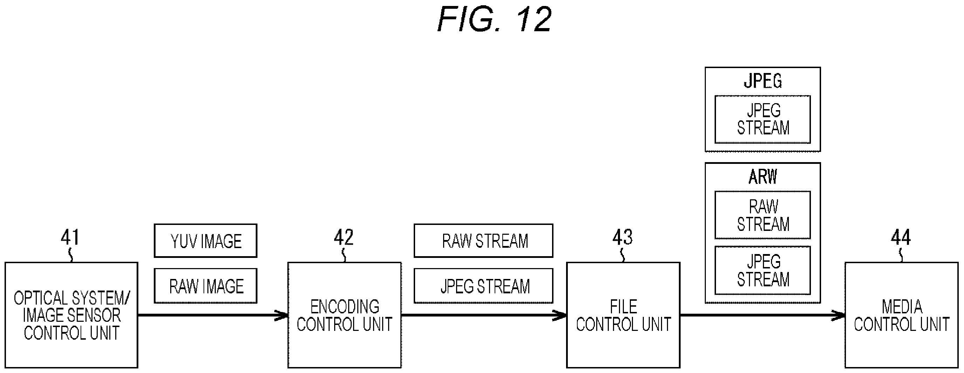

Fig. 12 is a diagram explaining a first example of generation of a plurality of files of the same image content in the digital camera 10.

Fig. 12 illustrates an example in which an ARW file and a JPEG file are generated as the plurality of files.

In a case where the ARW file and the JPEG file are generated in the digital camera 10, the encoding control unit 42 supplies a RAW image supplied from the optical system/image sensor control unit 41 to the file control unit 43 as a RAW stream that is a file stream to be stored in the ARW file. Moreover, the encoding control unit 42 generates a JPEG stream that is a file stream to be stored in the ARW file and the JPEG file from a YUV image supplied from the optical system/image sensor control unit 41, and supplies the generated JPEG stream to the file control unit 43.

The file control unit 43 generates the ARW file storing the RAW stream and the JPEG stream from the encoding control unit 42. Moreover, the file control unit 43 generates the JPEG file storing the JPEG stream from the encoding control unit 42. The file control unit 43 supplies the ARW file and the JPEG file to the media control unit 44.

Note that the file to be generated by the file control unit 43 can store a screen nail image and a thumbnail image in addition to an original image (that is an image corresponding to a master image to be stored in an HEIF file, and is hereinafter also referred to as a master image similarly to the case of the HEIF file) to be stored in the file.

For example, in the ARW file and the JPEG file, it is possible to store a JPEG stream of a screen nail image smaller in size (resolution) than the master image, and a JPEG stream of a thumbnail image smaller in size than the screen nail image, together with the JPEG stream of the master image.

In the following, it is assumed that, for example, file streams of the master image, the screen nail image, and the thumbnail image are stored in the file to be generated by the file control unit 43.

For the JPEG stream, when a master image size is, for example, a predetermined size larger than FHD, a screen nail image size is, for example, FHD, and a thumbnail image size is, for example, 160 × 120 (horizontal × vertical). Moreover, for the JPEG stream, a chroma format is, for example, 422 (4:2:2), and a bit depth (the number of bits expressing one pixel component) is, for example, 8 bits.

Here, the size of the master image, the size of the screen nail image, and the size of the thumbnail image are also referred to as a master size, a screen nail size, and a thumbnail size, respectively.

Furthermore, it is assumed that, for the file stream of the image, the data format of the file stream includes the codec, size, chroma format, and bit depth of the image.

In a case where the ARW file and the JPEG file are generated in the file control unit 43, the encoding control unit 42 generates JPEG streams of a master image, a screen nail image, and a thumbnail image from the YUV image supplied from the optical system/image sensor control unit 41.

The image (here, the YUV image) supplied from the optical system/image sensor control unit 41 to the file control unit 43, which is used to generate the file stream to be stored in the file to be generated by the file control unit 43, is also referred to as an original image.

For example, in a case where the JPEG streams of the master image, the screen nail image, and the thumbnail image to be stored in the ARW file and the JPEG streams of the master image, the screen nail image, and the thumbnail image to be stored in the JPEG file are file streams of the same data format, respectively, the encoding control unit 42 generates, from the original image, file streams of three types of data formats of the JPEG streams of the master image, the screen nail image, and the thumbnail image different from each other only in size of the data formats.

In this case, the number of YUV converters required for the encoding control unit 42 is not so large. The YUV converter is a converter that performs conversion of the size, chroma format, or bit depth of the YUV image as the original image.

Note that, in Fig. 12, the file control unit 43 generates the ARW file and the JPEG file as a plurality of files, but the plurality of files generated by the file control unit 43 is not limited thereto. For example, the file control unit 43 can generate two JPEG files different from each other in size of the master image. Furthermore, for example, the file control unit 43 can generate four files of two JPEG files different from each other in size of the master image and two ARW files different from each other in size of the master image.

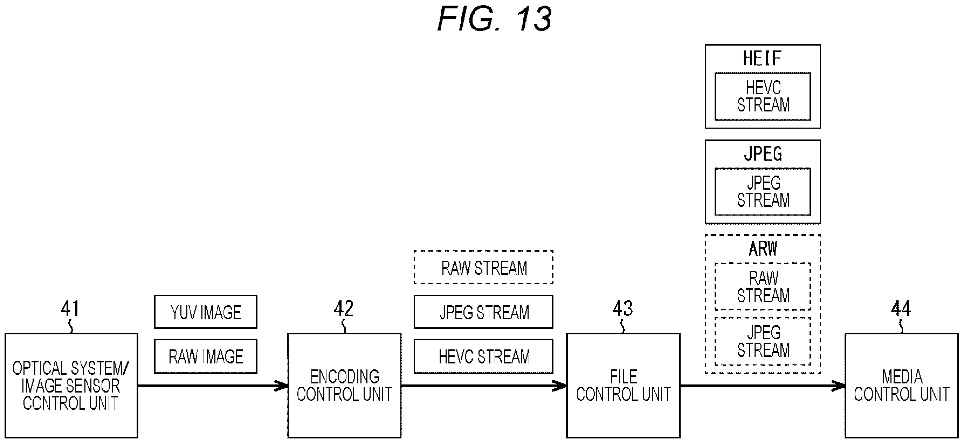

Fig. 13 is a diagram explaining a second example of generation of a plurality of files of the same image content in the digital camera 10.

Fig. 13 illustrates an example in which an HEIF file and a JPEG file are generated as the plurality of files.

In this case, the encoding control unit 42 generates a JPEG stream similar to that in the case of Fig. 12 from the YUV image as the original image, and supplies the JPEG stream to the file control unit 43. Moreover, the encoding control unit 42 generates an HEVC stream as a file stream to be stored in the HEIF file from the YUV image as the original image, and supplies the HEVC stream to the file control unit 43.

The file control unit 43 generates the JPEG file storing the JPEG stream from the encoding control unit 42. Moreover, the file control unit 43 generates the HEIF file storing the HEVC stream from the encoding control unit 42. The file control unit 43 supplies the JPEG file and the HEIF file to the media control unit 44.

As described in Fig. 12, in a case where the file streams of the master image, the screen nail image, and the thumbnail image are stored in the HEIF file, the encoding control unit 42 needs to generate the HEVC streams of the master image, the screen nail image, and the thumbnail image.

For the HEVC stream to be stored in the HEIF file, for example, a size larger than OFHD or FHD can be adopted as the master size. Furthermore, for example, OFHD or FHD can be adopted as the screen nail size, and for example, 320 × 240 can be adopted as the thumbnail size.

Moreover, for the HEVC stream, 422 or 420 can be adopted as the chroma format, and 10 bits or 8 bits can be adopted as the bit depth.

Thus, in a case where the HEIF file and the JPEG file are generated, it may be necessary to generate images in various data formats different from each other in at least one or more of size, chroma format, or bit depth, from the YUV image as the original image.

For this reason, the number of YUV converters necessary for the encoding control unit 42 is increased as compared with a case where the ARW file and the JPEG file are generated described in Fig. 12, and control of processing performed by the encoding control unit 42 becomes complicated.

Furthermore, in a case where the HEIF file and the JPEG file are generated, the HEVC stream to be stored in the HEIF file and the JPEG stream to be stored in the JPEG file are different from each other in codec, and thus the encoding control unit 42 needs separate codecs for generation of the HEVC stream and generation of the JPEG stream.

Note that, a point that the number of YUV converters required for the encoding control unit 42 is increased is similar in a case where the HEIF file and the JPEG file are generated as a plurality of files in the file control unit 43, and in addition, for example, in a case where an ARW file indicated by a dotted line in the figure is generated instead of the JPEG file, in a case where two HEIF files different from each other in size of the master image are generated, in a case where four files are generated of two HEIF files different from each other in master size and two JPEG files or two ARW files different from each other in master size, or the like.

Hereinafter, a description will be given of a method of simultaneously generating a plurality of files having the same image content in which file streams having different data formats are stored with a configuration as simple as possible.

Note that, in the following, it is assumed that FHD as the screen nail size of (the image set as) the JPEG stream, 160 × 120 as the thumbnail size, 422 as the chroma format, and 8 bits as the bit depth are each adopted.

Furthermore, it is assumed that OFHD or FHD as the screen nail size of the HEVC stream, 320 × 240 as the thumbnail size, 422 or 420 as the chroma format, and 10 bits or 8 bits as the bit depth are each adopted.

However, the screen nail size, the thumbnail size, the chroma format, and the bit depth of the JPEG stream and the HEVC stream are not limited thereto.

For example, in a case where JPEG is extended in the future, a data format conforming to the extended JPEG can be adopted. For example, a size larger or smaller than FHD as the screen nail size of the JPEG stream, a size larger or smaller than 160 × 120 as the thumbnail size, 444 as the chroma format, and 12 bits as the bit depth can each be adopted.

Furthermore, for example, a size different from OFHD or FHD as the screen nail size of the HEVC stream, a size different from 320 × 240 as the thumbnail size, 444 as the chroma format, and 12 bits as the bit depth can each be adopted.

Moreover, here, JPEG and HEVC are adopted as the codec, but the codec is not limited thereto. As the codec, a codec other than JPEG and HEVC, for example, Versatile Video Coding (WC) or the like can be adopted.

### <Processing of generating a plurality of files>

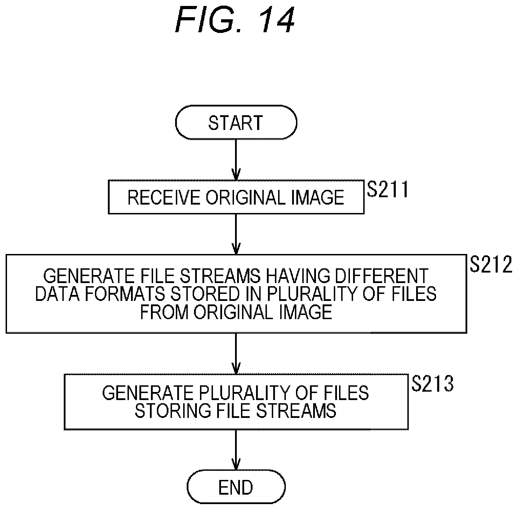

Fig. 14 is a flowchart explaining processing of generation of a plurality of files of the same image content in the digital camera 10.

In step S211, the encoding control unit 42 receives (acquires) a YUV image as an original image from the optical system/image sensor control unit 41, and the processing proceeds to step S212.

In step S212, the encoding control unit 42 generates a plurality of file streams having different data formats to be stored in the plurality of files from the original image.

That is, the encoding control unit 42 generates the plurality of file streams different from each other in at least one of size, chroma format, bit depth, or codec, from the original image.

Specifically, the encoding control unit 42 performs conversion of a part or all of the size, the chroma format, and the bit depth of the original image as necessary, and generates one or more images of a necessary size, chroma format, and bit depth. Furthermore, the encoding control unit 42 uses the original image as an image of a necessary size, chroma format, and bit depth as it is as necessary.

Moreover, the encoding control unit 42 encodes an image of a necessary size, chroma format, and bit depth by a necessary encoding method, and generates the plurality of file streams different from each other in at least one of size, chroma format, bit depth, or codec. Note that the encoding control unit 42 can receive a RAW image from the optical system/image sensor control unit 41 as necessary, and can use the RAW image as a file stream as it is.

The encoding control unit 42 supplies the file stream to the file control unit 43, and the processing proceeds from step S212 to step S213.

In step S213, the file control unit 43 stores the plurality of file streams different from each other in at least one of size, chroma format, bit depth, or codec from the encoding control unit 42 in separate files to generate the plurality of files.

### <First configuration example of encoding control unit 42>

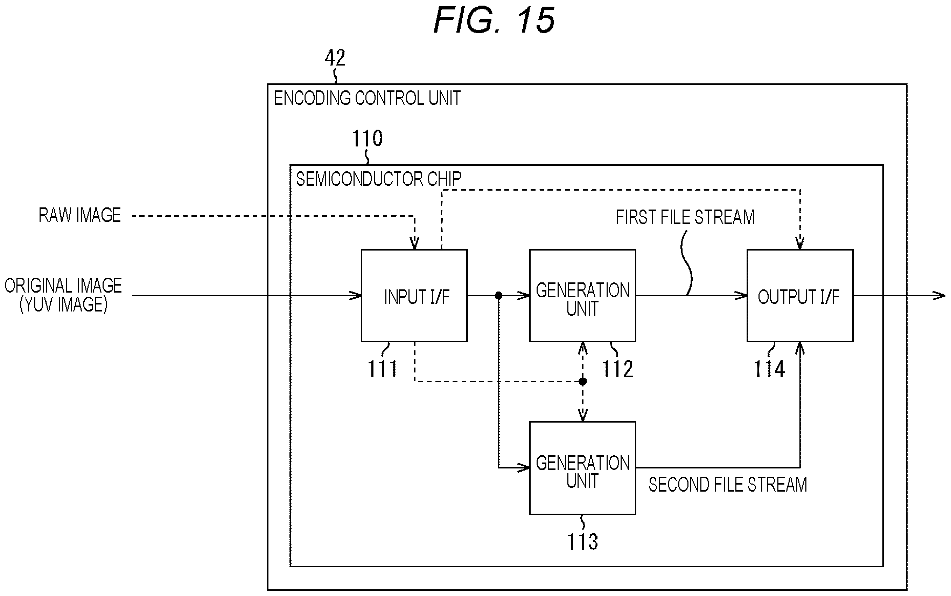

Fig. 15 is a block diagram illustrating a first configuration example of the encoding control unit 42.

In Fig. 15, the encoding control unit 42 includes one chip of a semiconductor chip 110.

The semiconductor chip 110 includes (functionally) an input I/F 111, generation units 112 and 113, and an output I/F 114.

The input I/F 111 receives a signal from the outside and supplies the signal to a necessary block. For example, the input I/F 111 receives a YUV image as an original image from the optical system/image sensor control unit 41, and supplies the YUV image to the generation units 112 and 113. Furthermore, for example, the input I/F 111 receives a RAW image from the optical system/image sensor control unit 41, and supplies the RAW image to the output I/F 114.

The generation unit 112 functions as a first generation unit that generates a first file stream from the original image from the input I/F 111 and supplies the first file stream to the output I/F 114. For example, the generation unit 112 encodes the original image by a first encoding method, and supplies a stream obtained as a result to the output I/F 114 as the first file stream. Furthermore, for example, the generation unit 112 performs conversion of one or more of the size, chroma format, or bit depth of the original image, to generate a first converted image. Then, the generation unit 112 encodes the first converted image by the first encoding method, and supplies a stream obtained as a result to the output I/F 114 as the first file stream.

The generation unit 113 functions as a second generation unit that generates a second file stream from the original image from the input I/F 111 and supplies the second file stream to the output I/F 114. For example, the generation unit 113 encodes the original image by a second encoding method, and supplies a stream obtained as a result to the output I/F 114 as the second file stream. Furthermore, for example, the generation unit 112 performs conversion of one or more of the size, chroma format, or bit depth of the original image, to generate a second converted image. Then, the generation unit 112 encodes the second converted image by the second encoding method, and supplies a stream obtained as a result to the output I/F 114 as the second file stream.

The output I/F 114 outputs (supplies) a signal to the outside. For example, the output I/F 114 supplies the first file stream supplied from the generation unit 112 and the second file stream supplied from the generation unit 113 to the file control unit 43. Furthermore, for example, the output I/F 114 supplies the RAW image from the input I/F 111 to the file control unit 43 as (a part of) the first file stream or the second file stream.

In the file control unit 43, a file in which the first file stream is stored and a file in which the second file stream is stored are generated.

As the first file stream and the second file stream, file streams of the same or different data formats can be adopted. In a case where file streams having different data formats are adopted as the first file stream and the second file stream, the first file stream and the second file stream are different from each other in one of or two or more of size, chroma format, bit depth, or codec.

For example, in a case where a file in which the first file stream is stored and a file in which the second file stream is stored, which are generated in the file control unit 43, are any files, it is possible to adopt file streams different from each other in at least one of or two or more of chroma format, bit depth, or codec, as the first file stream and the second file stream.

Furthermore, for example, in a case where an HEIF file is included in the file in which the first file stream is stored and the file in which the second file stream is stored, which are generated in the file control unit 43, that is, in a case where one of the file in which the first file stream is stored or the file in which the second file stream is stored is the HEIF file, it is possible to adopt file streams different from each other in at least one of or two or more of size, chroma format, bit depth, or codec, as the first file stream and the second file stream.

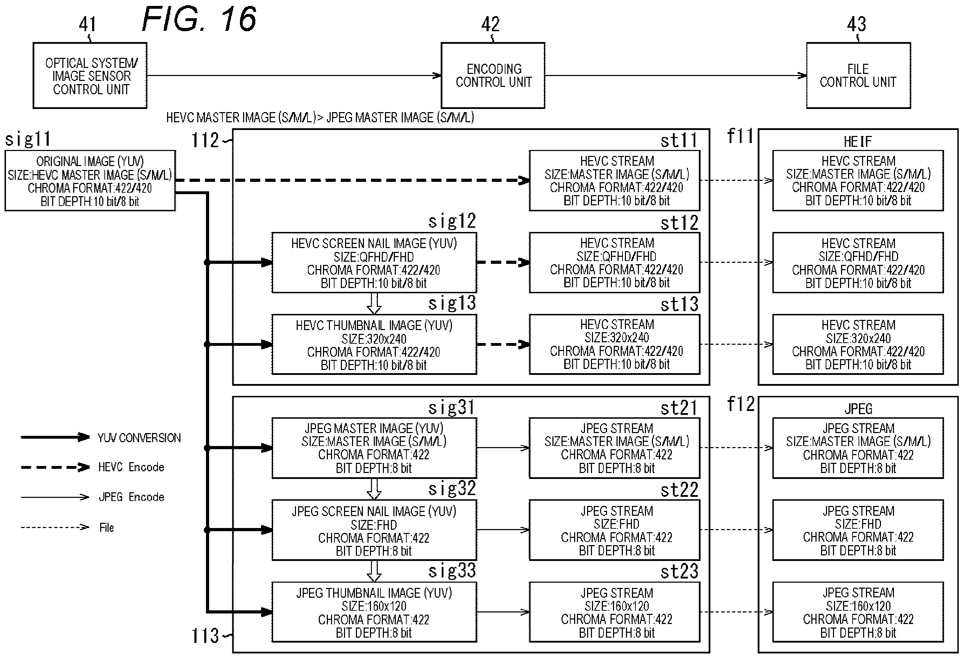

Fig. 16 is a diagram explaining an example of generation of an HEIF file and a JPEG file having the same image content in a case where the encoding control unit 42 includes the one chip of the semiconductor chip 110.

Here, it is assumed that there are three types of sizes as the size (master size) of the master image to be an HEVC stream to be stored in the HEIF file. Similarly, it is assumed that there are three types of sizes of the master image to be a JPEG stream to be stored in the JPEG file and an ARW file. The three types of sizes are represented by S, M, and L in ascending order.

Note that three types of sizes S, M, and L of the master image (hereinafter, also referred to as an HEVC master image) to be the HEVC stream and three types of sizes S, M, and L of the master image (hereinafter, also referred to as a JPEG master image) to be the JPEG stream may be the same or different.

In Fig. 16, as an original image sig11, for example, a YUV image having a size of S, M, or L (S/M/L) of the size of the HEVC master image, a chroma format of 422 or 420 (422/420), and a bit depth of 10 bits or 8 bits (10 bits/8 bits) is supplied from the optical system/image sensor control unit 41 to the encoding control unit 42. The encoding control unit 42 receives such an original image sig11 as an HEVC master image sig11.

Note that, in Fig. 16, it is assumed that sizes S, M, and L of the HEVC master image are larger than sizes S, M, and L of the JPEG master image, respectively.

In the encoding control unit 42 including the one chip of the semiconductor chip 110, the YUV image as the original image sig11 from the optical system/image sensor control unit 41 branches and is supplied to the generation units 112 and 113.

Then, in the encoding control unit 42, the generation unit 112 generates a YUV image having a size of QFHD or FHD (QFHD/FHD), a chroma format of 422 or 420, and a bit depth of 10 bits or 8 bits, as a screen nail image (hereinafter, also referred to as an HEVC screen nail image) sig12 to be an HEVC stream, from the YUV image as the original image sig11 from the optical system/image sensor control unit 41.

Moreover, in the encoding control unit 42, the generation unit 112 generates a YUV image having a size of 320 × 240, a chroma format of 422 or 420, and a bit depth of 10 bits or 8 bits, as a thumbnail image (hereinafter, also referred to as an HEVC thumbnail image) sig13 to be an HEVC stream, from the YUV image as the original image sig11.

Furthermore, in the encoding control unit 42, the generation unit 113 generates a YUV image having a size of S, M, or L, a chroma format of 422, and a bit depth of 8 bits, as a master image (hereinafter, also referred to as a JPEG master image) sig31 to be a JPEG stream, from the YUV image as the original image sig11.

Moreover, in the encoding control unit 42, the generation unit 113 generates a YUV image having a size of FHD, a chroma format of 422, and a bit depth of 8 bits, as a screen nail image (hereinafter, also referred to as a JPEG screen nail image) sig32 to be a JPEG stream, from the YUV image as the original image sig11.

Furthermore, in the encoding control unit 42, the generation unit 113 generates a YUV image having a size of 160 × 120, a chroma format of 422, and a bit depth of 8 bits, as a thumbnail image (hereinafter, also referred to as a JPEG thumbnail image) sig33 to be a JPEG stream, from the YUV image as the original image sig11.

As described above, the HEVC master image sig11, the HEVC screen nail image sig12, the HEVC thumbnail image sig13, and the JPEG master image sig31, the JPEG screen nail image sig32, and the JPEG thumbnail image sig33 are all generated from the common (the same) (one) original image sig11. As a result, it is possible to easily perform simultaneous generation of a plurality of files having the same image content in which file streams having different data formats are stored with a configuration as simple as possible.

Note that it is assumed that the data format (excluding the codec) of the original image is a data format greater than or equal to the data format of the image to be the file stream to be stored in the file to be generated by the file control unit 43. That is, it is assumed that the size, chroma format, and bit depth of the original image are respectively equal to the size, chroma format, and bit depth of the image to be the file stream, or are higher image quality values.

For example, in Fig. 16, in a case where the size L is adopted as the size of the JPEG master image, when the size L of the JPEG master image is larger than the size S of the HEVC master image but smaller than the size M of the HEVC master image, the size M or the size L of the HEVC master image having a size greater than or equal to the size L of the JPEG master image is adopted as the size of the original image sig11.

Furthermore, for example, in Fig. 16, 422 or 420 can be adopted as the chroma format of the original image sig11. However, 422 is adopted as the color format of the JPEG master image sig31, the JPEG screen nail image sig32, and the JPEG thumbnail image sig33. For this reason, as the chroma format of the original image sig11, out of 422 and 420, 422 is adopted that is greater than or equal to the color format 422 (resolution) of the JPEG master image sig31, the JPEG screen nail image sig32, and the JPEG thumbnail image sig33.

As described above, as the data format of the original image, it is possible to adopt a data format greater than or equal to (the specification of) the data format of the image to be the file stream. In this case, for example, the image quality of the master image can be prevented from being substantially the same as the image quality of the screen nail image or the thumbnail image.

Note that, as the data format of the original image, it is possible to adopt a data format less than the data format of the image to be the file stream. That is, as the data format of the original image, it is possible to adopt a data format having a lower specification than the data format of the image to be the file stream. In this case, the image to be the file stream is generated by interpolation or the like using the original image.

Thereafter, in the encoding control unit 42, the generation unit 112 performs HEVC encoding on the HEVC master image sig11, the HEVC screen nail image sig12, and the HEVC thumbnail image sig13. As a result, HEVC streams st11, st12, and st13 of the master image, the screen nail image, and the thumbnail image are generated (as the first file streams, respectively). Similarly, in the encoding control unit 42, the generation unit 113 performs JPEG encoding on the JPEG master image sig31, the JPEG screen nail image sig32, and the JPEG thumbnail image sig33. As a result, JPEG streams st21, st22, and st23 of the master image, the screen nail image, and the thumbnail image are generated (as the second file streams, respectively).

The encoding control unit 42 supplies the HEVC streams st11, st12, and st13, and the JPEG streams st21, st22, and st23, of the master image, the screen nail image, and the thumbnail image to the file control unit 43.

The file control unit 43 generates an HEIF file f11 storing the HEVC streams st11, st12, and st13 of the master image, the screen nail image, and the thumbnail image from the encoding control unit 42. Moreover, the file control unit 43 generates a JPEG file f12 storing the JPEG streams st21, st22, and st23 of the master image, the screen nail image, and the thumbnail image from the encoding control unit 42.

Note that, in Fig. 16, the HEVC thumbnail image is generated by directly using the original image, but the HEVC thumbnail image can be generated by using an image generated in a process of generating images in various data formats in the encoding control unit 42.

For example, the HEVC thumbnail image sig13 can be generated by using the HEVC screen nail image sig12 as indicated by an outlined arrow in the figure. Similarly, for example, the JPEG screen nail image sig32 can be generated by using the JPEG master image sig31, and the JPEG thumbnail image sig33 can be generated by using the JPEG screen nail image sig32.

Furthermore, for example, in a case where the data formats (excluding the codec) of the HEVC screen nail image sig12 and the JPEG screen nail image sig32 are the same, that is, in a case where the HEVC screen nail image sig12 and the JPEG screen nail image sig32 are YUV images having a size of FHD, a chroma format of 422, and a bit depth of 8 bits, for example, the HEVC screen nail image sig12 generated from the original image sig11 can be used as the JPEG screen nail image sig32 as it is.

The same applies to generation of a plurality of files having the same image content described below.

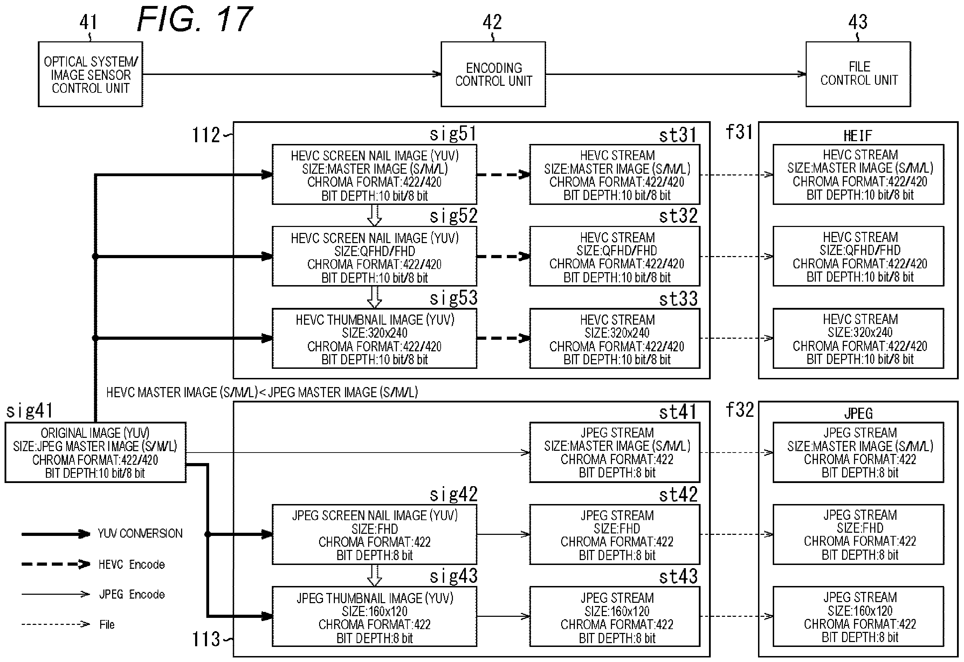

Fig. 17 is a diagram explaining another example of generation of an HEIF file and a JPEG file having the same image content in a case where the encoding control unit 42 includes the one chip of the semiconductor chip 110.

In Fig. 17, as an original image sig41, for example, a YUV image having a size of S, M, or L of the JPEG master image, a chroma format of 422 or 420, and a bit depth of 10 bits or 8 bits is supplied from the optical system/image sensor control unit 41 to the encoding control unit 42. The encoding control unit 42 receives such an original image sig41 as a JPEG master image sig41.

Note that, in Fig. 17, it is assumed that sizes S, M, and L of the JPEG master image are larger than sizes S, M, and L of the HEVC master image, respectively.

In the encoding control unit 42, the generation unit 112 generates a YUV image having a size of S, M, and L of the HEVC master image, a chroma format of 422 or 420, and a bit depth of 10 bits or 8 bits, as an HEVC master image sig51, from the YUV image as the original image sig41 from the optical system/image sensor control unit 41.

Furthermore, in the encoding control unit 42, the generation unit 112 generates a YUV image having a size of QFHD or FHD, a chroma format of 422 or 420, and a bit depth of 10 bits or 8 bits, as an HEVC screen nail image sig52, from the YUV image as the original image sig41.

Moreover, in the encoding control unit 42, the generation unit 112 generates a YUV image having a size of 320 × 240, a chroma format of 422 or 420, and a bit depth of 10 bits or 8 bits, as an HEVC thumbnail image sig53, from the YUV image as the original image sig41.

Furthermore, in the encoding control unit 42, the generation unit 113 generates a YUV image having a size of FHD, a chroma format of 422, and a bit depth of 8 bits, as a JPEG screen nail image sig42, from the YUV image as the original image sig41.

Furthermore, in the encoding control unit 42, the generation unit 113 generates a YUV image having a size of 160 × 120, a chroma format of 422, and a bit depth of 8 bits, as a JPEG thumbnail image sig43, from the YUV image as the original image sig41.

As described above, the HEVC master image sig51, the HEVC screen nail image sig52, and the HEVC thumbnail image sig53, and the JPEG master image sig41, the JPEG screen nail image sig42, and the JPEG thumbnail image sig43 are all generated from the same original image sig41.

Afterwards, similarly to the case of Fig. 16, in the encoding control unit 42, the generation unit 112 performs HEVC encoding on the HEVC master image sig51, the HEVC screen nail image sig52, and the HEVC thumbnail image sig53. As a result, HEVC streams st31, st32, and st33 of the master image, the screen nail image, and the thumbnail image are generated. Similarly, in the encoding control unit 42, the generation unit 113 performs JPEG encoding on the JPEG master image sig41, the JPEG screen nail image sig42, and the JPEG thumbnail image sig43. As a result, JPEG streams st41, st42, and st43 of the master image, the screen nail image, and the thumbnail image are generated.

The encoding control unit 42 supplies the HEVC streams st31, st32, and st33, and the JPEG streams st41, st42, and st43, of the master image, the screen nail image, and the thumbnail image to the file control unit 43.

The file control unit 43 generates an HEIF file f31 storing the HEVC streams st31, st32, and st33 of the master image, the screen nail image, and the thumbnail image from the encoding control unit 42. Moreover, the file control unit 43 generates a JPEG file f32 storing the JPEG streams st41, st42, and st43 of the master image, the screen nail image, and the thumbnail image from the encoding control unit 42.

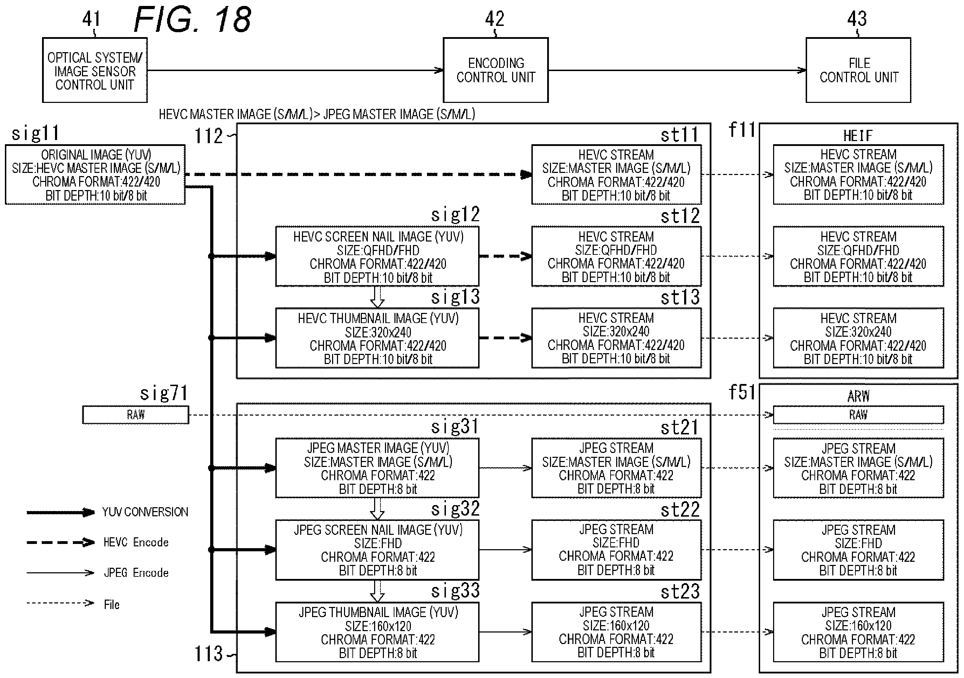

Fig. 18 is a diagram explaining an example of generation of an HEIF file and an ARW file having the same image content in a case where the encoding control unit 42 includes the one chip of the semiconductor chip 110.

In Fig. 18, similarly to Fig. 16, as the original image sig11, for example, a YUV image having a size of S, M, or L of the HEVC master image, a chroma format of 422 or 420, and a bit depth of 10 bits or 8 bits is supplied from the optical system/image sensor control unit 41 to the encoding control unit 42. The encoding control unit 42 receives such an original image sig11 as the HEVC master image sig11.

Note that, in Fig. 18, similarly to Fig. 16, it is assumed that the sizes S, M, and L of the HEVC master image are larger than the sizes S, M, and L of the JPEG master image, respectively.

In the encoding control unit 42, the generation unit 112 generates the HEVC screen nail image sig12 and the HEVC thumbnail image sig13 similar to those in the case of Fig. 16, from the YUV image as the original image sig11 from the optical system/image sensor control unit 41.

Furthermore, in the encoding control unit 42, the generation unit 113 generates the JPEG master image sig31, the JPEG screen nail image sig32, and the JPEG thumbnail image sig33 similar to those in the case of Fig. 16, from the YUV image as the original image sig11.

Afterwards, similarly to the case of Fig. 16, in the encoding control unit 42, the generation unit 112 performs HEVC encoding on the HEVC master image sig11, the HEVC screen nail image sig12, and the HEVC thumbnail image sig13. As a result, the HEVC streams st11, st12, and st13 of the master image, the screen nail image, and the thumbnail image are generated. Similarly, in the encoding control unit 42, the generation unit 113 performs JPEG encoding on the JPEG master image sig31, the JPEG screen nail image sig32, and the JPEG thumbnail image sig33. As a result, the JPEG streams st21, st22, and st23 of the master image, the screen nail image, and the thumbnail image are generated.

The encoding control unit 42 supplies the HEVC streams st11, st12, and st13, and the JPEG streams st21, st22, and st23, of the master image, the screen nail image, and the thumbnail image to the file control unit 43.

Moreover, in Fig. 18, the encoding control unit 42 supplies a RAW image sig71 from the optical system/image sensor control unit 41 to the file control unit 43 as a RAW stream sig71. The file control unit 43 generates the HEIF file f11 storing the HEVC streams st11, st12, and st13 of the master image, the screen nail image, and the thumbnail image from the encoding control unit 42. Moreover, the file control unit 43 generates an ARW file f51 storing the RAW stream sig71, and the JPEG streams st21, st22, and st23 of the master image, the screen nail image, and the thumbnail image from the encoding control unit 42.

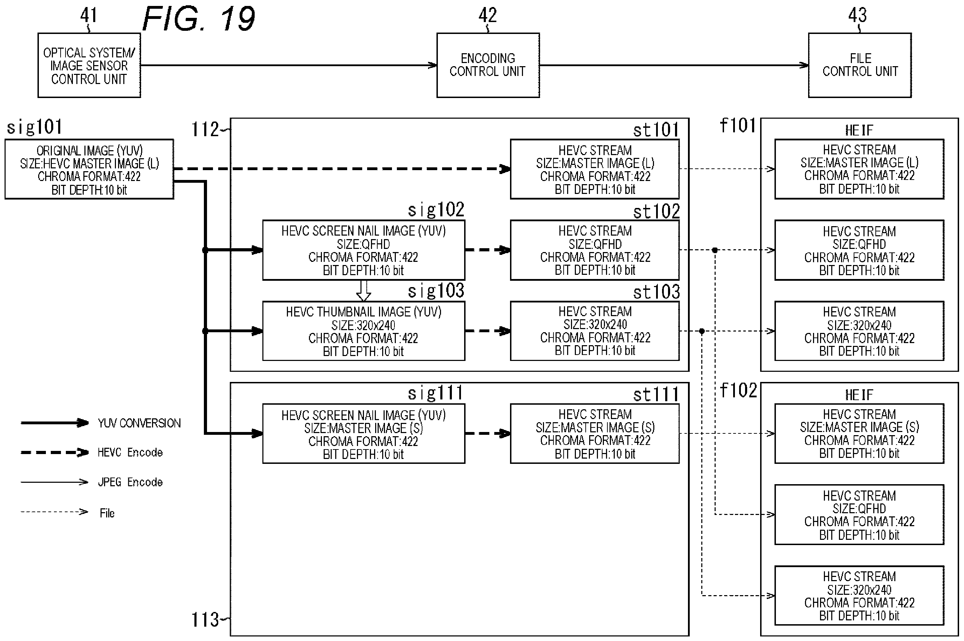

Fig. 19 is a diagram explaining an example of generation of two HEIF files having the same image content in a case where the encoding control unit 42 includes the one chip of the semiconductor chip 110.

Here, in the two HEIF files generated in Fig. 19, (HEVC streams of) HEVC master images different from each other in, for example, size of the data formats are stored. For example, an HEVC master image having a size L is stored in one HEIF file of the two HEIF files, and an HEVC master image having a size S is stored in the other HEIF file.

The HEIF file in which the HEVC master image having the size L is stored is also referred to as a first HEIF file, and the HEIF file in which the HEVC master image having the size S is stored is also referred to as a second HEIF file.

Furthermore, the HEVC master image stored in the first HEIF file (in which the HEVC stream is stored) is also referred to as a first HEVC master image, and the HEVC master image stored in the second HEIF file is also referred to as a second HEVC master image.

In Fig. 19, as an original image sig101, for example, a YUV image having a size L of the HEVC master image, a chroma format of 422, and a bit depth of 10 bits is supplied from the optical system/image sensor control unit 41 to the encoding control unit 42. The encoding control unit 42 receives such an original image sig101 as a first HEVC master image sig101.

In the encoding control unit 42, the generation unit 112 generates a YUV image having a size of QFHD, a chroma format of 422, and a bit depth of 10 bits, as an HEVC screen nail image sig102, from the YUV image as the original image sig101 from the optical system/image sensor control unit 41.

Moreover, in the encoding control unit 42, the generation unit 112 generates a YUV image having a size of 320 × 240, a chroma format of 422, and a bit depth of 10 bits, as an HEVC thumbnail image sig103, from the YUV image as the original image sig101.

Furthermore, in the encoding control unit 42, the generation unit 113 generates a YUV image having a size S of the HEVC master image, a chroma format of 422, and a bit depth of 10 bits, as a second HEVC master image sig111, from the YUV image as the original image sig101.

Thereafter, in the encoding control unit 42, the generation unit 112 performs HEVC encoding on the first HEVC master image sig101, the HEVC screen nail image sig102, and the HEVC thumbnail image sig103. As a result, HEVC streams st101, st102, and st103 of the first HEVC master image, the HEVC screen nail image, and the HEVC thumbnail image are generated.

Furthermore, in the encoding control unit 42, the generation unit 113 performs HEVC encoding on the second HEVC master image sig111 to generate an HEVC stream st111 of the second HEVC master image.

The encoding control unit 42 supplies the HEVC streams st101, st111, st102, and st103 of the first HEVC master image, the second HEVC master image, the HEVC screen nail image, and the HEVC thumbnail image to the file control unit 43.

The file control unit 43 generates a first HEIF file f101 storing the HEVC streams st101, st102, and st103 of the first HEVC master image, the HEVC screen nail image, and the HEVC thumbnail image from the encoding control unit 42. Moreover, the file control unit 43 generates a second HEIF file f102 storing the HEVC streams st111, st102, and st103 of the second HEVC master image, the HEVC screen nail image, and the HEVC thumbnail image from the encoding control unit 42.

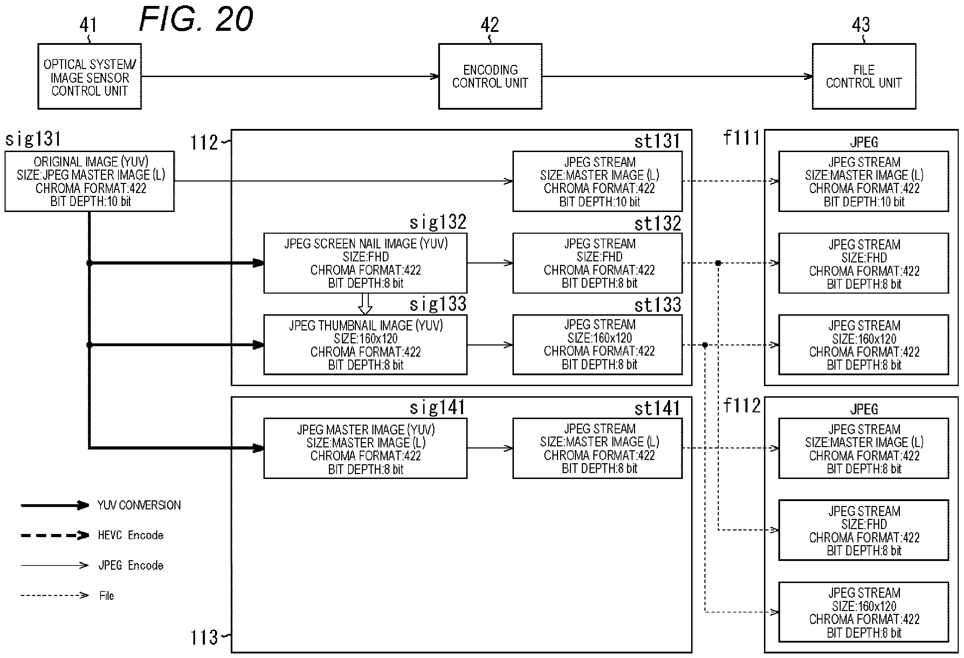

Fig. 20 is a diagram explaining an example of generation of two JPEG files having the same image content in a case where the encoding control unit 42 includes the one chip of the semiconductor chip 110.

Here, in the two JPEG files generated in Fig. 20, (JPEG streams of) JPEG master images different from each other in, for example, bit depth of the data formats are stored. For example, a JPEG master image having a bit depth of 10 bits is stored in one JPEG file of the two JPEG files, and a JPEG master image having a bit depth of 8 bits is stored in the other JPEG file.

The JPEG file in which the JPEG master image having the bit depth of 10 bits is stored is also referred to as a first JPEG file, and a JPEG file in which the JPEG master image having the bit depth of 8 bits is stored is also referred to as a second JPEG file.

Furthermore, the JPEG master image stored in the first JPEG file (in which the JPEG stream is stored) is also referred to as a first JPEG master image, and the JPEG master image stored in the second JPEG file is also referred to as a second JPEG master image.

Note that, in the current JPEG, a bit depth of 10 bits cannot be handled, but here, it is assumed that JPEG is extended in the future and a bit depth of 10 bits can be handled.

In Fig. 20, as an original image sig131, for example, a YUV image having a size of L of the JPEG master image, a chroma format of 422, and a bit depth of 10 bits is supplied from the optical system/image sensor control unit 41 to the encoding control unit 42. The encoding control unit 42 receives such an original image sig131 as a first JPEG master image sig131.

In the encoding control unit 42, the generation unit 112 generates a YUV image having a size of FHD, a chroma format of 422, and a bit depth of 8 bits, as a JPEG screen nail image sig132, from the YUV image as the original image sig131 from the optical system/image sensor control unit 41.

Moreover, in the encoding control unit 42, the generation unit 112 generates a YUV image having a size of 160 × 120, a chroma format of 422, and a bit depth of 8 bits, as a JPEG thumbnail image sig133, from the YUV image as the original image sig131.

Furthermore, in the encoding control unit 42, the generation unit 113 generates a YUV image having a size L of the JPEG master image, a chroma format of 422, and a bit depth of 8 bits, as a second JPEG master image sig141, from the YUV image as the original image sig131.

Thereafter, in the encoding control unit 42, the generation unit 112 performs JPEG encoding on the first JPEG master image sig131, the JPEG screen nail image sig132, and the JPEG thumbnail image sig133. As a result, JPEG streams st131, st132, and st133 of the first JPEG master image, the JPEG screen nail image, and the JPEG thumbnail image are generated.

Furthermore, in the encoding control unit 42, the generation unit 113 performs JPEG encoding on the second JPEG master image sig141 to generate a JPEG stream st141 of the second JPEG master image.

The encoding control unit 42 supplies the JPEG streams st131, st141, st132, and st133 of the first JPEG master image, the second JPEG master image, the JPEG screen nail image, and the JPEG thumbnail image to the file control unit 43.

The file control unit 43 generates a first JPEG file f111 storing the JPEG streams st131, st132, and st133 of the first JPEG master image, the JPEG screen nail image, and the JPEG thumbnail image from the encoding control unit 42. Moreover, the file control unit 43 generates a second JPEG file f112 storing the JPEG streams st141, st132, and st133 of the second JPEG master image, the JPEG screen nail image, and the JPEG thumbnail image from the encoding control unit 42.

### <Second configuration example of encoding control unit 42>

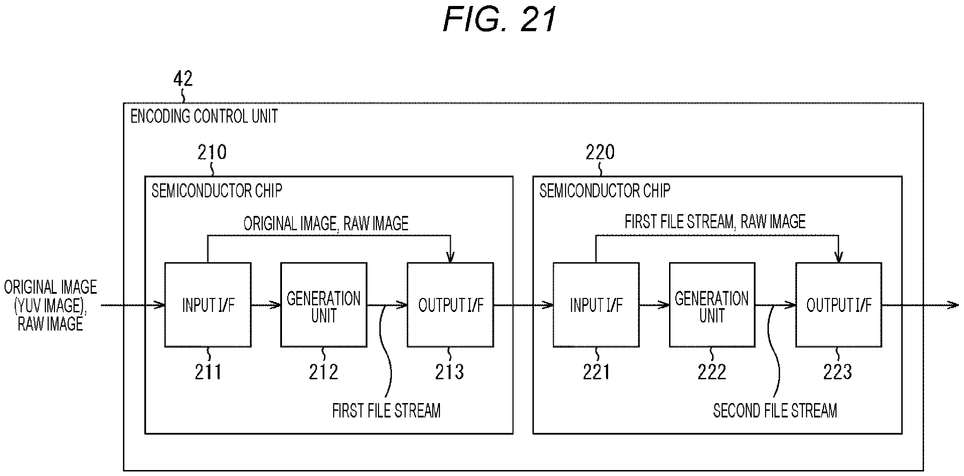

Fig. 21 is a block diagram illustrating a second configuration example of the encoding control unit 42.

In Fig. 21, the encoding control unit 42 includes two chips of semiconductor chips 210 and 220. The semiconductor chips 210 and 220 are connected in series, the semiconductor chip 210 is arranged at a preceding stage, and the semiconductor chip 220 is arranged at a subsequent stage.

The semiconductor chip 210 includes (functionally) an input I/F 211, a generation unit 212, and an output I/F 213.

The input I/F 211 receives a signal from the outside and supplies the signal to a necessary block. For example, the input I/F 211 receives a YUV image as an original image from the optical system/image sensor control unit 41, and supplies the YUV image to the generation unit 212 and the output I/F 213. Furthermore, for example, the input I/F 211 receives a RAW image from the optical system/image sensor control unit 41, and supplies the RAW image to the output I/F 213.

The generation unit 212 generates the first file stream from the original image from the input I/F 211, and supplies the first file stream to the output I/F 213. For example, the generation unit 212 encodes the original image by the first encoding method, and supplies a stream obtained as a result to the output I/F 213 as the first file stream. Furthermore, for example, the generation unit 212 performs conversion of one or more of the size, chroma format, or bit depth of the original image, to generate the first converted image. Then, the generation unit 212 encodes the first converted image by the first encoding method, and supplies a stream obtained as a result to the output I/F 213 as the first file stream.

The output I/F 213 outputs (supplies) a signal to the outside. For example, the output I/F 213 supplies the original image and the RAW image supplied from the input I/F 211 and the first file stream supplied from the generation unit 212 to the semiconductor chip 220.

The semiconductor chip 220 includes (functionally) an input I/F 221, a generation unit 222, and an output I/F 223.

The input I/F 221 receives a signal from the outside and supplies the signal to a necessary block. For example, the input I/F 221 receives a YUV image as an original image from (the output I/F 213 of) the semiconductor chip 210, and supplies the YUV image to the generation unit 222. Furthermore, for example, the input I/F 221 receives the first file stream and the RAW image from the semiconductor chip 210, and supplies the first file stream and the RAW image to the output I/F 223.

The generation unit 222 generates the second file stream from the original image from the input I/F 221, and supplies the second file stream to the output I/F 223. For example, the generation unit 222 encodes the original image by the second encoding method, and supplies a stream obtained as a result to the output I/F 223 as the second file stream. Furthermore, for example, the generation unit 222 performs conversion of one or more of the size, chroma format, or bit depth of the original image, to generate the second converted image. Then, the generation unit 222 encodes the second converted image by the second encoding method, and supplies a stream obtained as a result to the output I/F 223 as the second file stream.

The output I/F 223 outputs (supplies) a signal to the outside. For example, the output I/F 223 supplies the first file stream and the RAW image supplied from the input I/F 221 and the second file stream supplied from the generation unit 222 to the file control unit 43.

In the file control unit 43, a file in which the first file stream is stored and a file in which the second file stream is stored are generated.

As described above, the encoding control unit 42 including the two chips of the semiconductor chips 210 and 220 is useful in a case where the file formats of the plurality of files having the same image content generated by the digital camera 10 are different from each other. For example, it is possible to generate a file stream (first file stream) to be stored in a file of one file format by one semiconductor chip of the semiconductor chips 210 and 220. Moreover, it is possible to generate a file stream (second file stream) to be stored in a file of another file format by the other semiconductor chip.

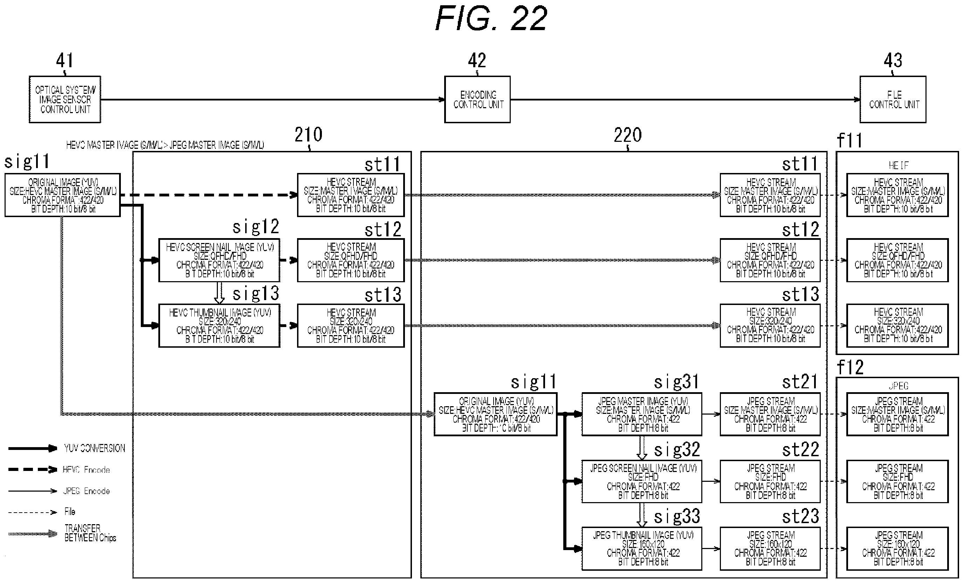

Fig. 22 is a diagram explaining an example of generation of an HEIF file and a JPEG file having the same image content in a case where the encoding control unit 42 includes the two chips of the semiconductor chips 210 and 220.

In Fig. 22, as the original image sig11, for example, a YUV image having a size of S, M, or L of the HEVC master image, a chroma format of 422 or 420, and a bit depth of 10 bits or 8 bits is supplied from the optical system/image sensor control unit 41 to the encoding control unit 42. In the encoding control unit 42, the semiconductor chip 210 at the preceding stage receives such an original image sig11 as the HEVC master image sig11.

Note that, in Fig. 22, it is assumed that sizes S, M, and L of the HEVC master image are larger than sizes S, M, and L of the JPEG master image, respectively.

In the encoding control unit 42, the semiconductor chip 210 at the preceding stage generates a YUV image having a size of QFHD or FHD, a chroma format of 422 or 420, and a bit depth of 10 bits or 8 bits, as the HEVC screen nail image sig12, from the YUV image as the original image sig11 from the optical system/image sensor control unit 41.

Moreover, in the encoding control unit 42, the semiconductor chip 210 generates a YUV image having a size of 320 × 240, a chroma format of 422 or 420, and a bit depth of 10 bits or 8 bits, as the HEVC thumbnail image sig13, from the YUV image as the original image sig11.

Thereafter, in the encoding control unit 42, the semiconductor chip 210 performs HEVC encoding on the HEVC master image sig11, the HEVC screen nail image sig12, and the HEVC thumbnail image sig13. As a result, HEVC streams st11, st12, and st13 of the master image, the screen nail image, and the thumbnail image are generated (as the first file streams, respectively).

The semiconductor chip 210 supplies the original image sig11 and the HEVC streams st11, st12, and st13 of the master image, the screen nail image, and the thumbnail image to the semiconductor chip 220 at the subsequent stage.

Thus, in the encoding control unit 42 including the two chips of the semiconductor chips 210 and 220, the original image sig11 is transferred from the semiconductor chip 210 at the preceding stage to the semiconductor chip 220 at the subsequent stage.

In the encoding control unit 42, the semiconductor chip 220 at the subsequent stage receives the original image sig11 and the HEVC streams st11, st12, and st13 of the master image, the screen nail image, and the thumbnail image from the semiconductor chip 210 at the preceding stage.

Then, the semiconductor chip 220 generates a YUV image having a size of S, M, or L, a chroma format of 422, and a bit depth of 8 bits, as the JPEG master image sig31, from the YUV image as the original image sig11 from the semiconductor chip 210 at the preceding stage.

Moreover, the semiconductor chip 220 generates a YUV image having a size of FHD, a chroma format of 422, and a bit depth of 8 bits, as the JPEG screen nail image sig32, from the YUV image as the original image sig11.

Furthermore, the semiconductor chip 220 generates a YUV image having a size of 160 × 120, a chroma format of 422, and a bit depth of 8 bits, as the JPEG thumbnail image sig33, from the YUV image as the original image sig11.

Thereafter, the semiconductor chip 220 performs JPEG encoding on the JPEG master image sig31, the JPEG screen nail image sig32, and the JPEG thumbnail image sig33. As a result, the JPEG streams st21, st22, and st23 of the master image, the screen nail image, and the thumbnail image are generated (as the second file streams, respectively).

Then, the semiconductor chip 220 supplies the JPEG streams st21, st22, and st23 of the master image, the screen nail image, and the thumbnail image to the file control unit 43.

Moreover, the semiconductor chip 220 supplies the HEVC streams st11, st12, and st13 of the master image, the screen nail image, and the thumbnail image from the semiconductor chip 210 at the preceding stage to the file control unit 43.

In the file control unit 43, the HEIF file f11 storing the HEVC streams st11, st12, and st13 of the master image, the screen nail image, and the thumbnail image from the semiconductor chip 220 is generated. Moreover, in the file control unit 43, the JPEG file f12 storing the JPEG streams st21, st22, and st23 of the master image, the screen nail image, and the thumbnail image from the semiconductor chip 220 is generated.

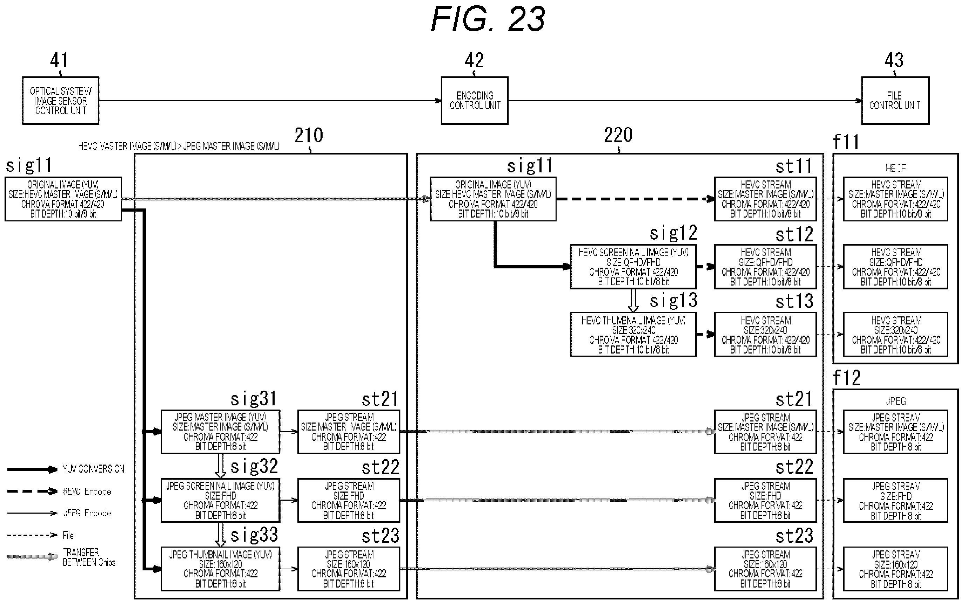

Fig. 23 is a diagram explaining another example of generation of an HEIF file and a JPEG file having the same image content in a case where the encoding control unit 42 includes the two chips of the semiconductor chips 210 and 220.

In Fig. 22, the HEVC streams st11, st12, and st13 are generated in the semiconductor chip 210 at the preceding stage, and the JPEG streams st21, st22, and st23 are generated in the semiconductor chip 220 at the subsequent stage. On the other hand, Fig. 23 is different from the case of Fig. 22 in that the JPEG streams st21, st22, and st23 are generated in the semiconductor chip 210 at the preceding stage, and the HEVC streams st11, st12, and st13 are generated in the semiconductor chip 220 at the subsequent stage.

That is, in Fig. 23, as the original image sig11, for example, a YUV image having a size of S, M, or L of the HEVC master image, a chroma format of 422 or 420, and a bit depth of 10 bits or 8 bits is supplied from the optical system/image sensor control unit 41 to the encoding control unit 42. In the encoding control unit 42, the semiconductor chip 210 at the preceding stage receives such an original image sig11 as the HEVC master image sig11.

Then, the semiconductor chip 210 generates a YUV image having a size of S, M, or L, a chroma format of 422, and a bit depth of 8 bits, as the JPEG master image sig31, from the YUV image as the original image sig11 from the optical system/image sensor control unit 41.

Moreover, the semiconductor chip 210 generates a YUV image having a size of FHD, a chroma format of 422, and a bit depth of 8 bits, as the JPEG screen nail image sig32, from the YUV image as the original image sig11.

Furthermore, the semiconductor chip 210 generates a YUV image having a size of 160 × 120, a chroma format of 422, and a bit depth of 8 bits, as the JPEG thumbnail image sig33, from the YUV image as the original image sig11.

Thereafter, the semiconductor chip 210 performs JPEG encoding on the JPEG master image sig31, the JPEG screen nail image sig32, and the JPEG thumbnail image sig33. As a result, the JPEG streams st21, st22, and st23 of the master image, the screen nail image, and the thumbnail image are generated (as the first file streams, respectively).

The semiconductor chip 210 supplies the original image sig11 and the JPEG streams st21, st22, and st23 of the master image, the screen nail image, and the thumbnail image to the semiconductor chip 220 at the subsequent stage.

In the encoding control unit 42, the semiconductor chip 220 at the subsequent stage receives the original image sig11 from the semiconductor chip 210 at the preceding stage, as the HEVC master image sig11. Moreover, the semiconductor chip 220 receives the JPEG streams st21, st22, and st23 of the master image, the screen nail image, and the thumbnail image from the semiconductor chip 210 at the preceding stage.

Then, the semiconductor chip 220 at the subsequent stage generates a YUV image having a size of QFHD or FHD, a chroma format of 422 or 420, and a bit depth of 10 bits or 8 bits, as the HEVC screen nail image sig12, from the YUV image as the original image sig11 from the semiconductor chip 210 at the preceding stage.

Moreover, the semiconductor chip 220 generates a YUV image having a size of 320 × 240, a chroma format of 422 or 420, and a bit depth of 10 bits or 8 bits, as the HEVC thumbnail image sig13, from the YUV image as the original image sig11.

Thereafter, the semiconductor chip 220 performs HEVC encoding on the HEVC master image sig11, the HEVC screen nail image sig12, and the HEVC thumbnail image sig13. As a result, the HEVC streams st11, st12, and st13 of the master image, the screen nail image, and the thumbnail image are generated (as the second file streams, respectively).

Then, the semiconductor chip 220 supplies the HEVC streams st11, st12, and st13 of the master image, the screen nail image, and the thumbnail image to the file control unit 43.

Moreover, the semiconductor chip 220 supplies the JPEG streams st21, st22, and st23 of the master image, the screen nail image, and the thumbnail image from the semiconductor chip 210 at the preceding stage to the file control unit 43.

In the file control unit 43, the HEIF file f11 storing the HEVC streams st11, st12, and st13 of the master image, the screen nail image, and the thumbnail image from the semiconductor chip 220 is generated. Moreover, in the file control unit 43, the JPEG file f12 storing the JPEG streams st21, st22, and st23 of the master image, the screen nail image, and the thumbnail image from the semiconductor chip 220 is generated.

In the above, a description has been given of generation of the plurality of files having the same image content by the encoding control unit 42 (hereinafter, also referred to as the encoding control unit 42 having a two-chip configuration) including the two chips of the semiconductor chips 210 and 220, by taking generation of the HEIF file and the JPEG file as an example. The encoding control unit 42 having the two-chip configuration can generate, for example, the HEIF file and the ARW file as described in Fig. 18, in addition to generating the HEIF file and the JPEG file. Furthermore, the encoding control unit 42 having the two-chip configuration can generate, for example, the two HEIF files as described in Fig. 19 and the two JPEG files as described in Fig. 20. Moreover, the encoding control unit 42 having the two-chip configuration can generate, for example, three or more files, and a plurality of files including files other than the HEIF file, the JPEG file, and the ARW file.

Furthermore, in the digital camera 10, for example, it is possible to set one or more of data formats (codec, size, chroma format, or bit depth) of file streams to be stored in the plurality of files having the same image content depending on the user's operation (designation).

### <Description of computer to which the present technology is applied>

Next, a series of processing of blocks constituting the signal processing unit 13 (Fig. 1) such as the above-described encoding control unit 42 and others can be performed by hardware or software. In a case where the series of processing is performed by software, a program constituting the software is installed in a computer or the like.

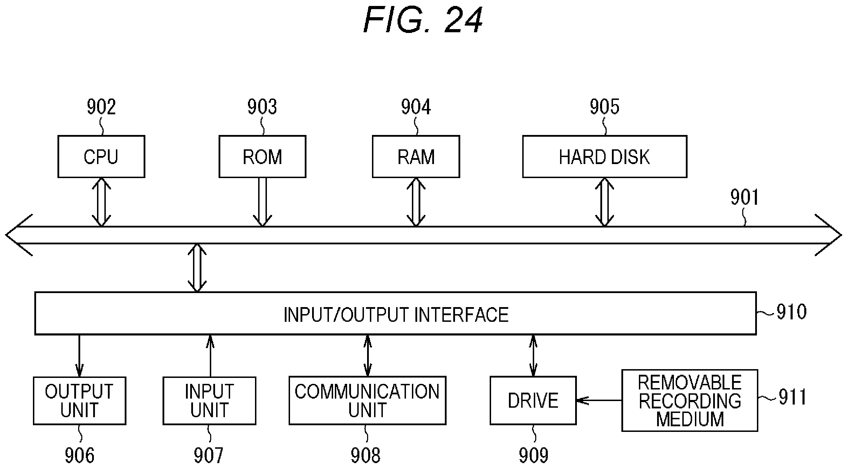

Fig. 24 is a block diagram illustrating a configuration example of an embodiment of a computer in which a program for executing the series of processing described above is installed.

The program can be recorded in advance on a hard disk 905 or a ROM 903 as a recording medium incorporated in the computer.

Alternatively, the program can be stored (recorded) in a removable recording medium 911 driven by a drive 909. Such a removable recording medium 911 can be provided as so-called packaged software. Here, examples of the removable recording medium 911 include a flexible disk, a Compact Disc Read Only Memory (CD-ROM), a Magneto Optical (MO) disk, a Digital Versatile Disc (DVD), a magnetic disk, a semiconductor memory, and the like.

Note that, the program can be installed on the computer from the removable recording medium 911 as described above, or can be downloaded to the computer via a communications network or a broadcast network and installed on the hard disk 905 incorporated. In other words, for example, the program can be wirelessly transferred from a download site to the computer via an artificial satellite for digital satellite broadcasting, or can be transmitted to the computer via a network such as a Local Area Network (LAN) or the Internet by wire.

The computer incorporates a Central Processing Unit (CPU) 902, and an input/output I/F 910 is connected to the CPU 902 via a bus 901.

The CPU 902 executes the program stored in the Read Only Memory (ROM) 903 according to a command when the command is input by a user operating an input unit 907 or the like via the input/output I/F 910. Alternatively, the CPU 902 loads the program stored in the hard disk 905 into a random access memory (RAM) 904 and executes the program.

The CPU 902 therefore performs the processing according to the above-described flowchart or the processing performed by the configuration of the above-described block diagram. Then, the CPU 902 causes the processing result to be output from an output unit 906 or transmitted from a communication unit 908 via the input/output I/F 910, and further, recorded on the hard disk 905, for example, as necessary.

Note that, the input unit 907 includes a keyboard, a mouse, a microphone, and the like. Furthermore, the output unit 906 includes a Liquid Crystal Display (LCD), a speaker, and the like.

Here, in the present specification, the processing performed by the computer in accordance with the program does not necessarily have to be performed chronologically in the order described as the flowchart. That is, the process performed by the computer in accordance with the program also includes processes executed in parallel or individually (for example, parallel process or process by an object).

Furthermore, the program may be processed by one computer (processor) or may be distributed and processed by a plurality of computers. Moreover, the program may be transferred to a remote computer and executed.

Moreover, in the present specification, a system means a set of a plurality of constituents (device, module (component), and the like), and it does not matter whether or not all of the constituents are in the same cabinet. Thus, a plurality of devices that is accommodated in a separate cabinet and connected to each other via a network and one device that accommodates a plurality of modules in one cabinet are both systems.

Note that, the embodiment of the present technology is not limited to the embodiment described above, and various modifications are possible without departing from the scope of the present technology.

For example, the present technology can adopt a configuration of cloud computing that shares one function in a plurality of devices via a network to perform processing in cooperation.

Furthermore, each step described in the above flowchart can be executed by sharing in a plurality of devices, other than being executed by one device.

Moreover, in a case where a plurality of pieces of processing is included in one step, the plurality of pieces of processing included in the one step can be executed by sharing in a plurality of devices, other than being executed by one device.

Furthermore, the advantageous effects described in the present specification are merely examples and are not limited to them, and other effects may be included.

Note that, the present technology can have the following configurations.
<1> A data processing device including
   an encoding control unit that generates, from an identical image, file data obtained by encoding an image and to be stored in each of a plurality of files, in which
   first file data to be stored in one file of the plurality of files and second file data to be stored in another one file are data different from each other in at least one of codec, chroma format, or bit depth.
<2> The data processing device according to <1>, in which
   the identical image has a size, a chroma format, and a bit depth greater than or equal to a size, a chroma format, and a bit depth of an image whose file data is stored in the files.
<3> The data processing device according to <1> or <2>, in which
   one or more of a codec, a chroma format, or a bit depth of the file data is set depending on user's designation.
<4> The data processing device according to any of <1> to <3>, in which
   the one file or the another one file is a RAW file in which a RAW image is stored.
<5> The data processing device according to any of <1> to <4>, in which
   the encoding control unit includes one chip of a semiconductor chip, and
   the one chip of the semiconductor chip
   includes:
      a first generation unit that generates one file data of the first file data or the second file data; and
      a second generation unit that generates another file data.
<6> The data processing device according to any of <1> to <4>, in which
   the encoding control unit includes two chips of semiconductor chips, and
   one semiconductor chip of the two chips of the semiconductor chips generates one file data of the first file data or the second file data, and
   another semiconductor chip generates another file data.
<7> The data processing device according to <6>, in which
   the one semiconductor chip receives the identical image, generates the one file data from the identical image, and transfers the identical image to the another semiconductor chip, and
   the another semiconductor chip generates the another file data from the identical image from the one semiconductor chip.
<8> The data processing device according to any of <1> to <7>, in which
   the first file data is data obtained by performing HEVC encoding on an image, and
   the second file data is data obtained by performing JPEG encoding on an image.
<9> A data processing method including
   generating, from an identical image, file data obtained by encoding an image and to be stored in each of a plurality of files, in which
   first file data to be stored in one file of the plurality of files and second file data to be stored in another one file are data different from each other in at least one of codec, chroma format, or bit depth.
<10> A program for causing a computer to function as an encoding control unit that generates, from an identical image, file data obtained by encoding an image and to be stored in each of a plurality of files, in which
   first file data to be stored in one file of the plurality of files and second file data to be stored in another one file are data different from each other in at least one of codec, chroma format, or bit depth.
<11> A data processing device including
   an encoding control unit that generates, from an identical image, file data obtained by encoding an image and to be stored in each of a plurality of files including at least a High Efficiency Image File Format (HEIF) file, in which
   first file data to be stored in the HEIF file of the plurality of files and second file data to be stored in another one file other than the HEIF file are data different from each other in at least one of codec, chroma format, bit depth, or image size.
<12> The data processing device according to <11>, in which
   the identical image has a size, a chroma format, and a bit depth greater than or equal to a size, a chroma format, and a bit depth of an image whose file data is stored in the files.
<13> The data processing device according to <11> or <12>, in which
   one or more of a codec, a chroma format, a bit depth, or an image size of the file data is set depending on user's designation.
<14> The data processing device according to any of <11> to <13>, in which
   the another one file is a RAW file in which a RAW image is stored.
<15> The data processing device according to any of <11> to <14>, in which
   the encoding control unit includes one chip of a semiconductor chip, and
   the one chip of the semiconductor chip includes:
      a first generation unit that generates one file data of the first file data or the second file data; and
      a second generation unit that generates another file data.
<16> The data processing device according to any of <11> to <14>, in which
   the encoding control unit includes two chips of semiconductor chips, and
   one semiconductor chip of the two chips of the semiconductor chips generates one file data of the first file data or the second file data, and
   another semiconductor chip generates another file data.
<17> The data processing device according to <16>, in which
   the one semiconductor chip receives the identical image, generates the one file data from the identical image, and transfers the identical image to the another semiconductor chip, and
   the another semiconductor chip generates the another file data from the identical image from the one semiconductor chip.
<18> The data processing device according to any of <11> to <17>, in which
   the first file data is data obtained by performing HEVC encoding on an image, and
   the second file data is data obtained by performing JPEG encoding on an image.
<19> A data processing method including
   generating, from an identical image, file data obtained by encoding an image and to be stored in each of a plurality of files including at least a High Efficiency Image File Format (HEIF) file, in which
   first file data to be stored in the HEIF file of the plurality of files and second file data to be stored in another one file other than the HEIF file are data different from each other in at least one of codec, chroma format, bit depth, or image size.
<20> A program for causing a computer to function as an encoding control unit that generates, from an identical image, file data obtained by encoding an image and to be stored in each of a plurality of files including at least a High Efficiency Image File Format (HEIF) file, in which
   first file data to be stored in the HEIF file of the plurality of files and second file data to be stored in another one file other than the HEIF file are data different from each other in at least one of codec, chroma format, bit depth, or image size.

### REFERENCE SIGNS LIST

- 10: Digital camera
- 11: Optical system
- 13: Signal processing unit
- 14: Medium
- 15, 16: I/F
- 17: Button/Key
- 18: Touch panel
- 19: Liquid crystal panel
- 20: Viewfinder
- 21: I/F
- 41: Optical system/image sensor control unit
- 42: Encoding control unit
- 43: File control unit
- 44: Media control unit
- 45: Operation control unit
- 46: Display control unit
- 47: UI control unit
- 110: Semiconductor chip
- 111: Input I/F
- 112, 113: Generation unit
- 114: Output I/F
- 210: Semiconductor chip
- 211: Input I/F
- 212: Generation unit
- 213: Output I/F
- 220: Semiconductor chip
- 221: Input I/F
- 222: Generation unit
- 223: Output I/F
- 901: Bus
- 902: CPU
- 903: ROM
- 904: RAM
- 905: Hard disk
- 906: Output unit
- 907: Input unit
- 908: Communication unit
- 909: Drive
- 910: Input/output interface
- 911: Removable recording medium

## Claims

1. A data processing device comprising
an encoding control unit that generates, from an identical image, file data obtained by encoding an image and to be stored in each of a plurality of files, wherein
first file data to be stored in one file of the plurality of files and second file data to be stored in another one file are data different from each other in at least one of codec, chroma format, or bit depth.

2. The data processing device according to claim 1, wherein
the identical image has a size, a chroma format, and a bit depth greater than or equal to a size, a chroma format, and a bit depth of an image whose file data is stored in the files.

3. The data processing device according to claim 1, wherein
one or more of a codec, a chroma format, or a bit depth of the file data is set depending on user's designation.

4. The data processing device according to claim 1, wherein
the one file or the another one file is a RAW file in which a RAW image is stored.

5. The data processing device according to claim 1, wherein
the encoding control unit includes one chip of a semiconductor chip, and
the one chip of the semiconductor chip
includes:
a first generation unit that generates one file data of the first file data or the second file data; and
a second generation unit that generates another file data.

6. The data processing device according to claim 1, wherein
the encoding control unit includes two chips of semiconductor chips, and
one semiconductor chip of the two chips of the semiconductor chips generates one file data of the first file data or the second file data, and
another semiconductor chip generates another file data.

7. The data processing device according to claim 6, wherein
the one semiconductor chip receives the identical image, generates the one file data from the identical image, and transfers the identical image to the another semiconductor chip, and
the another semiconductor chip generates the another file data from the identical image from the one semiconductor chip.

8. The data processing device according to claim 1, wherein
the first file data is data obtained by performing HEVC encoding on an image, and
the second file data is data obtained by performing JPEG encoding on an image.

9. A data processing method comprising
generating, from an identical image, file data obtained by encoding an image and to be stored in each of a plurality of files, wherein
first file data to be stored in one file of the plurality of files and second file data to be stored in another one file are data different from each other in at least one of codec, chroma format, or bit depth.

10. A program for causing a computer to function as an encoding control unit that generates, from an identical image, file data obtained by encoding an image and to be stored in each of a plurality of files, wherein
first file data to be stored in one file of the plurality of files and second file data to be stored in another one file are data different from each other in at least one of codec, chroma format, or bit depth.

11. A data processing device comprising
an encoding control unit that generates, from an identical image, file data obtained by encoding an image and to be stored in each of a plurality of files including at least a High Efficiency Image File Format (HEIF) file, wherein
first file data to be stored in the HEIF file of the plurality of files and second file data to be stored in another one file other than the HEIF file are data different from each other in at least one of codec, chroma format, bit depth, or image size.

12. The data processing device according to claim 11, wherein
the identical image has a size, a chroma format, and a bit depth greater than or equal to a size, a chroma format, and a bit depth of an image whose file data is stored in the files.

13. The data processing device according to claim 11, wherein
one or more of a codec, a chroma format, a bit depth, or an image size of the file data is set depending on user's designation.

14. The data processing device according to claim 11, wherein
the another one file is a RAW file in which a RAW image is stored.

15. The data processing device according to claim 11, wherein
the encoding control unit includes one chip of a semiconductor chip, and
the one chip of the semiconductor chip
includes:
a first generation unit that generates one file data of the first file data or the second file data; and
a second generation unit that generates another file data.

16. The data processing device according to claim 11, wherein
the encoding control unit includes two chips of semiconductor chips, and
one semiconductor chip of the two chips of the semiconductor chips generates one file data of the first file data or the second file data, and
another semiconductor chip generates another file data.

17. The data processing device according to claim 16, wherein
the one semiconductor chip receives the identical image, generates the one file data from the identical image, and transfers the identical image to the another semiconductor chip, and
the another semiconductor chip generates the another file data from the identical image from the one semiconductor chip.

18. The data processing device according to claim 11, wherein
the first file data is data obtained by performing HEVC encoding on an image, and
the second file data is data obtained by performing JPEG encoding on an image.

19. A data processing method comprising
generating, from an identical image, file data obtained by encoding an image and to be stored in each of a plurality of files including at least a High Efficiency Image File Format (HEIF) file, wherein
first file data to be stored in the HEIF file of the plurality of files and second file data to be stored in another one file other than the HEIF file are data different from each other in at least one of codec, chroma format, bit depth, or image size.

20. A program for causing a computer to function as an encoding control unit that generates, from an identical image, file data obtained by encoding an image and to be stored in each of a plurality of files including at least a High Efficiency Image File Format (HEIF) file, wherein
first file data to be stored in the HEIF file of the plurality of files and second file data to be stored in another one file other than the HEIF file are data different from each other in at least one of codec, chroma format, bit depth, or image size.
